# EUROPEAN PATENT APPLICATION

(11) **EP 2 675 206 A1**
(43) Date of publication of application: **18.12.2013**
(21) Application number: 12744432.1
(22) Date of filing: 10.02.2012
(51) Int. Cl.: H04W 16/18, H04M 11/00

(54) **AREA RANGE ESTIMATION DEVICE AND AREA RANGE ESTIMATION METHOD**

(30) Priority: 10.02.2011 JP 2011027849; 31.03.2011 JP 2011080204
(71) Applicant: NTT DOCOMO, INC., Chiyoda-ku Tokyo 100-6150 (JP)
(72) Inventor: YAMAGUCHI Takayasu, Tokyo 100-6150 (JP); TERADA Masayuki, Tokyo 100-6150 (JP); HAGIWARA Junichiro, Tokyo 100-6150 (JP); OKAJIMA Ichiro, Tokyo 100-6150 (JP)
(74) Representative: Viering, Jentschura & Partner
(86) International application number: PCT/JP2012/053195
(87) International publication number: WO 2012/108540

(57) **Abstract**

An area range estimation device (10) includes a first location information acquisition unit (11) that acquires first location information containing terminal identification information identifying a mobile terminal (100) and area identification information identifying a location area of the mobile terminal (100), a second location information acquisition unit (12) that acquires second location information containing the terminal identification information and location information indicating a location of the mobile terminal (100), a correspondence information generation unit (13) that generates correspondence information based on the area identification information and the location information by using the acquired first location information and second location information, and an area range estimation unit (14) that estimates a range of an area identified by the area identification information based on the generated correspondence information.

## Description

### Technical Field

The present invention relates to an area range estimation device and an area range estimation method for estimating an area range, which is a geographical range of an area such as a sector of a base station.

### Background Art

A geographical range of a sector, which is the area of influence of an antenna of a base station (sector range) has been defined by Voronoi tessellation using the location of the base station or the center point of a sector or the like. For example, the following Patent Literature 1 discloses a technique to set the coverage of each base station by Voronoi tessellation using the location of each base station as a seed.

### Citation List

### Patent Literature

PTL 1: Japanese Unexamined Patent Application Publication No. 2005-102275

### Summary of Invention

### Technical Problem

However, due to the depression angle of an antenna, the presence or absence of an obstacle and the like, there has been a problem that the boundary of the actual sector range is different from the boundary by Voronoi tessellation. When the set sector range is different from the actual sector range, it causes an error in estimating the geographical distribution of a population (the number of terminals) using a location registration signal, for example.

In light of the foregoing, in order to solve the above problem, an object of the present invention is to provide an area range estimation device and an area range estimation method for more appropriately estimating an area range of an area such as a sector.

### Solution to Problem

To solve the above problem, an area range estimation device according to the present invention is an area range estimation device using correspondence information containing area identification information identifying a location area of a terminal and location information indicating a location of the terminal, including an area boundary estimation means for estimating a boundary of an area identified by each area identification information based on location information associated with each of the area identification information identifying a plurality of different location areas of the terminal, and an area range estimation means for estimating a range of an area based on a boundary of an area estimated by the area boundary estimation means.

Further, an area range estimation method according to the present invention is an area range estimation method performed by an area range estimation device using correspondence information containing area identification information identifying a location area of a terminal and location information indicating a location of the terminal, including an area boundary estimation step of estimating a boundary of an area identified by each area identification information based on location information associated with each of the area identification information identifying a plurality of different location areas of the terminal, and an area range estimation step of estimating a range of an area based on a boundary of an area estimated in the area boundary estimation step.

According to the above, it is possible to estimate a boundary of an area identified by the area identification information based on the location information associated with the area identification information. By using the boundary of the area, the range of the area can be estimated.

Further, it is preferred that the area range estimation device further includes a first location information acquisition means for acquiring first location information containing terminal identification information identifying the terminal and area identification information identifying a location area of the terminal, and a second location information acquisition means for acquiring second location information containing the terminal identification information and location information indicating a location of the terminal, and the correspondence information contains at least one of first correspondence information generated by a correspondence information generation means for generating correspondence information based on the area identification information and the location information by using the first location information acquired by the first location information acquisition means and the second location information acquired by the second location information acquisition means, and second correspondence information acquired by a correspondence information acquisition means for acquiring correspondence information containing the terminal identification information identifying the terminal, the area identification information identifying a location area of the terminal, and the location information indicating a location of the terminal.

According to the above, the first correspondence information is generated based on the area identification information indicating a location area contained in the first location information and the location information (coordinate information) indicating a location of the terminal contained in the second location information. Further, the second correspondence information containing the terminal identification information, the area identification information, and the location information indicating a location of the terminal is acquired. Those correspondence information indicate that a location indicated by the location information is included in an area identified by the area identification information. Thus, by estimating the area range based on the first correspondence information and the second correspondence information, it is possible to reflect a relationship between the area identification information and the location information on estimation of an area range and thereby estimate the area range more appropriately. As a result, it is possible to estimate a population (the number of terminals) in a certain geographical range, improve the accuracy of aggregation, analysis and the like and thereby improve the radio quality.

It is preferred that the first location information and the second location information are acquired by different positioning techniques and positioning timing. In this case, by generating the correspondence information by combining the location information acquired by different positioning techniques, the correspondence between the area identification information and the location information can be estimated.

Further, in the area range estimation device according to the present invention, it is preferred that the first location information further contains first time information indicating a time when the first location information is acquired, the second location information further contains second time information indicating a time when the second location information is acquired, and the correspondence information generation means extracts the first location information and the second location information having the same terminal identification information and having a time difference between a time indicated by the first time information and a time indicated by the second time information being a specified value or less, and generates first correspondence information based on the area identification information of the first location information and the location information of the second location information.

As a time difference between a time indicated by the first time information and a time indicated by the second time information is smaller, the reliability of correspondence between the area identification information and the location information is higher. Accordingly, by extracting the first location information and the second location information having a time difference of a specified value or less, it is possible to obtain highly reliable first correspondence information based on the area identification information of the first location information and the location information of the second location information. It is thereby possible to estimate the area range more accurately.

Further, in the area range estimation device according to the present invention, it is preferred that the first location information further contains first time information indicating a time when the first location information is acquired, the second location information further contains second time information indicating a time when the second location information is acquired, and the correspondence information generation means extracts the second location information having the same terminal identification information as one first location information, the second location information being a specified number of second location information containing the second time information indicating a time earlier than a time indicated by the first time information contained in the one first time information and a specified number of second location information containing the second time information indicating a time later than a time indicated by the first time information contained in the one first time information, estimates location information indicating a location of the terminal at the time indicated by the first time information contained in the one first location information based on the second time information and the location information contained in each of the extracted second location information and the first time information contained in the one first location information, and generates first correspondence information based on the estimated location information of the terminal and the area identification information of the one first location information.

The second location information that contains the second time information indicating the times before and after the time indicated by the first time information contained in the first location information are extracted. Then, the location of the terminal at the time indicated by the first time information contained in the first location information is estimated using the extracted second location information, thereby grasping the location of the terminal when the first location information is acquired more accurately. By generating the first correspondence information using the location information indicating the location of the terminal obtained in this manner, it is possible to obtain highly reliable corresponding information.

Further, in the area range estimation device according to the present invention, it is preferred that when first observation target information containing at least one of observation target period information indicating a period to be observed and observation area information indicating an area to be observed is input from outside, the first information acquisition means acquires the first location information based on the first observation target information, and when second observation target information containing at least one of observation target period information indicating a period to be observed and observation range information indicating a geographical range to be observed is input from outside, the second information acquisition means acquires the second location information based on the second observation target information.

By the input of the observation target period and the observation target area, the correspondence information in a desired time range or geographical range can be generated. It is thereby possible to reduce the load to generate the correspondence information.

Further, in the area range estimation device according to the present invention, it is preferred that the correspondence information generation means generates first correspondence information further containing time difference information indicating a time difference between a time indicated by the first time information and a time indicated by the second time information, and the area boundary estimation means corrects the correspondence information in accordance with the time difference information of the correspondence information and estimates a boundary of an area identified by the area identification information based on the corrected correspondence information.

In this manner, by correcting the correspondence information in accordance with the time difference information of the correspondence information, it is possible to change the degree of effect of the correspondence information on the estimation of an area range depending on the reliability of the correspondence information, thus estimating the area range more accurately.

Further, in the area range estimation device according to the present invention, it is preferred that the second correspondence information further contains quality information about quality of the location information, and the area boundary estimation means corrects the second correspondence information in accordance with the quality information and estimates a boundary of an area identified by the area identification information based on the corrected second correspondence information.

In this manner, by correcting the second correspondence information in accordance with the quality information and estimating a boundary of an area based on the corrected second correspondence information, it is possible to estimate the area range more accurately.

Further, in the area range estimation device according to the present invention, it is preferred that the area boundary estimation means corrects the correspondence information by calculating a center of gravity of a location indicated by the location information of the correspondence information for each of the area identification information of the correspondence information and shifting the location indicated by the location information of the correspondence information toward the center of gravity in accordance with the time difference information or the quality information of the correspondence information.

In this manner, by shifting the location indicated by the location information of the correspondence information toward the center of gravity of each area in accordance with the time difference information or the quality information of the correspondence information, it is possible to change the degree of effect of the correspondence information on the estimation of an area range depending on the reliability of the correspondence information, thus estimating the area range more accurately.

Further, in the area range estimation device according to the present invention, it is preferred that the area boundary estimation means corrects the correspondence information by assigning weights to the correspondence information in accordance with the time difference information or the quality information of the correspondence information.

In this manner, by assigning weights to the correspondence information in accordance with the time difference information or the quality information of the correspondence information, it is possible to change the degree of effect of the correspondence information on the estimation of an area range depending on the reliability of the correspondence information, thus estimating the area range more accurately.

Further, in the area range estimation device according to the present invention, it is preferred that the area boundary estimation means corrects the correspondence information by calculating a weight for each of the correspondence information in accordance with the time difference information or the quality information of the correspondence information, and newly generating a specified number of correspondence information dispersed from the location indicated by the location information contained in the correspondence information in accordance with a specified distribution on which the weight of the correspondence information is reflected and having the same area identification information as the correspondence information.

In this manner, by generating the correspondence information whose positions are dispersed in accordance with a specified distribution, it is thereby possible to accurately increase the number of correspondence information to be used as basis for estimating the boundary of the area identified by the area identification information, thus estimating the range of the area identified by the area identification information more accurately.

Further, in the area range estimation device according to the present invention, it is preferred that the area boundary estimation means estimates a boundary of an area identified by the area identification information based on the number of correspondence information containing the location information being within a specified area estimation unit region and the area identification information being specified area identification information.

In this manner, by counting the number of correspondence information within the area estimation unit region for each area identification information, it is possible to estimate the boundary of the area identified by the area identification information and thereby easily perform the area range estimation process.

Further, in the area range estimation device according to the present invention, it is preferred that the correspondence information generation means generates correspondence information further containing time difference information indicating a time difference between a time indicated by the first time information and a time indicated by the second time information, and the area range estimation means calculates a weight for each of the correspondence information in accordance with the time difference information of the correspondence information, and calculates a probability that the terminal is present in the location indicated by the location information contained in the correspondence information and its vicinity by using a probability density function in accordance with a specified distribution on which the weight of the correspondence information is reflected, and estimates a range of an area identified by the area identification information based on the calculated probability.

Specifically, the area range estimation means calculates a probability density function indicating a probability that the terminal is present in the location indicated by the location information contained in the correspondence information and its vicinity for each of the correspondence information generated by the correspondence information generation means. At this time, it is preferred to use a probability density function in accordance with a specified distribution on which the weight of the correspondence information is reflected. Further, by adding probability density functions calculated for the correspondence information having the same area identification information together, it is possible to calculate the presence probability of the terminal at an arbitrary location for each of the area identification information. Note that, when adding probability density functions calculated for the correspondence information having the same area identification information together, multiplication by the weight of the correspondence information may be made. By using the presence probability of the terminal calculated for each area identification information, it is possible to estimate the area identification information at an arbitrary position and thereby estimate a range of an area identified by the area identification information more accurately.

Further, it is preferred that the area range estimation device according to the present invention further includes an area terminal number acquisition means for acquiring the number of terminals in an area identified by the area identification information, and a conversion means for converting the number of terminals in the area acquired by the area terminal number acquisition means into the number of terminals in a partition based on a positional relationship between a range of the area estimated by the area range estimation means and the partition partitioned according to a specified partition rule.

By converting the acquired number of terminals in the area into the number of terminals in a partition, it is possible to make the distribution of the number of terminals more clear.

Further, it is preferred that the area range estimation device according to the present invention further includes a population estimation means for estimating a population of one user attribute based on the number of terminals converted by the conversion means and a ratio of the number of in-area terminals having the one user attribute in a predetermined wide area and a population of the one user attribute included in the wide area based on statistical data.

In this case, it is possible to estimate the population of one user attribute accurately.

To solve the above problem, an area range estimation device according to the present invention includes a first location information acquisition means for acquiring first location information containing terminal identification information identifying a terminal and area identification information identifying a location area of the terminal, a second location information acquisition means for acquiring second location information containing the terminal identification information and location information indicating a location of the terminal, a correspondence information generation means for generating correspondence information based on the area identification information and the location information by using the first location information acquired by the first location information acquisition means and the second location information acquired by the second location information acquisition means, and an area range estimation means for estimating a range of an area identified by the area identification information based on the correspondence information generated by the correspondence information generation means.

Further, an area range estimation method according to the present invention is an area range estimation method performed by an area range estimation device, including a first location information acquisition step of acquiring first location information containing terminal identification information identifying a terminal and area identification information identifying a location area of the terminal, a second location information acquisition step of acquiring second location information containing the terminal identification information and location information indicating a location of the terminal, a correspondence information generation step of generating correspondence information based on the area identification information and the location information by using the first location information acquired in the first location information acquisition step and the second location information acquired in the second location information acquisition step, and an area range estimation step of estimating a range of an area identified by the area identification information based on the correspondence information generated in the correspondence information generation step.

According to this, the range of an area that is identified by the area identification information can be estimated based on the correspondence information based on the area identification information and the location information.

Further, in an area range estimation method according to another aspect of the present invention, it is preferred that the correspondence information generation means generates first correspondence information further containing time difference information indicating a time difference between a time indicated by the first time information and a time indicated by the second time information, and the area range estimation means corrects the correspondence information in accordance with the time difference information of the correspondence information and estimates a range of an area identified by the area identification information based on the corrected correspondence information.

In this manner, by correcting the correspondence information in accordance with the time difference information of the correspondence information, it is possible to change the degree of effect of the correspondence information on the estimation of an area range depending on the reliability of the correspondence information, thus estimating the area range more accurately.

Further, in an area range estimation method according to another aspect of the present invention, it is preferred that the area range estimation means corrects the correspondence information by calculating a center of gravity of a location indicated by the location information of the correspondence information for each of the area identification information of the correspondence information and shifting the location indicated by the location information of the correspondence information toward the center of gravity in accordance with the time difference information of the correspondence information.

In this manner, by shifting the location indicated by the location information of the correspondence information toward the center of gravity in accordance with the time difference information of the correspondence information, it is possible to change the degree of effect of the correspondence information on the estimation of an area range depending on the reliability of the correspondence information, thus estimating the area range more accurately.

Further, in an area range estimation method according to another aspect of the present invention, it is preferred that the area range estimation means corrects the correspondence information by assigning weights to the correspondence information in accordance with the time difference information of the correspondence information.

In this manner, by assigning weights to the correspondence information in accordance with the time difference information of the correspondence information, it is possible to change the degree of effect of the correspondence information on the estimation of an area range depending on the reliability of the correspondence information, thus estimating the area range more accurately.

Further, in an area range estimation method according to another aspect of the present invention, it is preferred that the area range estimation means corrects the correspondence information by calculating a weight for each of the correspondence information in accordance with the time difference information of the correspondence information, and newly generating a specified number of correspondence information dispersed from the location indicated by the location information contained in the correspondence information in accordance with a specified distribution on which the weight of the correspondence information is reflected and having the same area identification information as the correspondence information.

In this manner, by generating the correspondence information whose positions are dispersed in accordance with a specified distribution, it is thereby possible to accurately increase the number of correspondence information to be used as basis for estimating the range of the area identified by the area identification information, thus estimating the range of the area identified by the area identification information more accurately.

Further, in an area range estimation method according to another aspect of the present invention, it is preferred that the area range estimation means estimates a range of an area identified by the area identification information based on the number of correspondence information containing the location information being within a specified area estimation unit region and the area identification information being specified area identification information.

In this manner, by counting the number of correspondence information within the area estimation unit region for each area identification information, it is possible to estimate the boundary of the area identified by the area identification information and thereby easily perform the area range estimation process.

### Advantageous Effects of Invention

According to the present invention, it is possible to estimate an area range more appropriately.

### Brief Description of Drawings

Fig. 1 is a system confguration diagram of a communication system according to first to third embodiments.
Fig. 2 is a block diagram showing a functional configuration of an area range estimation device according to a first embodiment.
Fig. 3 is a view showing an example of a first location information management table included in a first location information acquisition unit.
Fig. 4 is a view showing an example of a second location information management table included in a second location information acquisition unit.
Fig. 5 is a view showing an example of a correspondence information management table included in a correspondence information generation unit.
Fig. 6 is a view showing an example of estimation of an area boundary.
Fig. 7 is a view showing an example of an estimated area range.
Fig. 8 is a flowchart showing an area range estimation process of the area range estimation device according to the first embodiment.
Fig. 9 is a block diagram showing a functional configuration of an area range estimation device according to second and third embodiments.
Fig. 10 is a view showing an example of correction of correspondence information in accordance with a time difference.
Fig. 11 is a flowchart showing an area range estimation process of the area range estimation device according to second to fourth embodiments.
Fig. 12 is a view showing an example of weighting of correspondence information in accordance with a time difference.
Fig. 13 is a view showing an area boundary in the case of using Bayesian method on the correspondence information in Fig. 12.
Fig. 14 is a view showing an area boundary in the case of using kNN method on the correspondence information in Fig. 12.
Fig. 15 is a view showing an example of weighting of correspondence information in accordance with a time difference.
Fig. 16 is a graph showing a probability density distribution.
Fig. 17 is a flowchart showing an area range estimation process of the area range estimation device according to a fifth embodiment.
Fig. 18 is a view showing an example of correspondence information for which a weight is calculated.
Fig. 19 is a view showing an example of dispersed correspondence information.
Fig. 20 is a view showing an example of layout of dispersed correspondence information.
Fig. 21 is a view showing the number of correspondence information for each area ID in each area estimation unit region.
Fig. 22 is a flowchart showing an area range estimation process of the area range estimation device according to a sixth embodiment.
Fig. 23 is a view showing a relationship between timing when first location information and second location information are acquired and the actual moving trajectory of a mobile terminal in an alternative example.
Fig. 24 is a flowchart showing a correspondence information generation process performed by a correspondence information generation unit in an alternative example.
Fig. 25 is a view showing a configuration of an area range estimation device according to a seventh embodiment.
Fig. 26 is a view to describe a combination of a mesh and an area map.
Fig. 27 is a view to describe calculation of the area of each divided area and an area ratio.
Fig. 28 is a view to describe calculation of the total number of terminals of divided areas in a certain mesh.
Fig. 29 is a view to describe a conversion process of the number of terminals according to an eighth embodiment.
Fig. 30 is a view showing a determinant for conversion to the estimated number of terminals in a target output unit.
Fig. 31 is a view showing a configuration of an area range estimation device according to a ninth embodiment.
Fig. 32 is a view showing GPS information with area information.
Fig. 33 is a view showing correspondence information.
Fig. 34 is a view showing a configuration of an area range estimation device according to a tenth embodiment.
Fig. 35 is a view showing a weight for each correspondence information.
Fig. 36 is a view showing a weight for each correspondence information.
Fig. 37 is a view showing a weight for each correspondence information.
Fig. 38 is a view showing a weight for each correspondence information.
Fig. 39 is a view showing a configuration of an area range estimation device according to an eleventh embodiment.
Fig. 40 is a flowchart showing an example of a hiding process.

### Description of Embodiments

Preferred embodiments of an area range estimation device and an area range estimation method according to the present invention are described hereinafter in detail with reference to the drawings. Note that, in the following description, the same or equivalent elements are denoted by the same reference numerals and repeated explanation thereof is omitted.

### (First Embodiment)

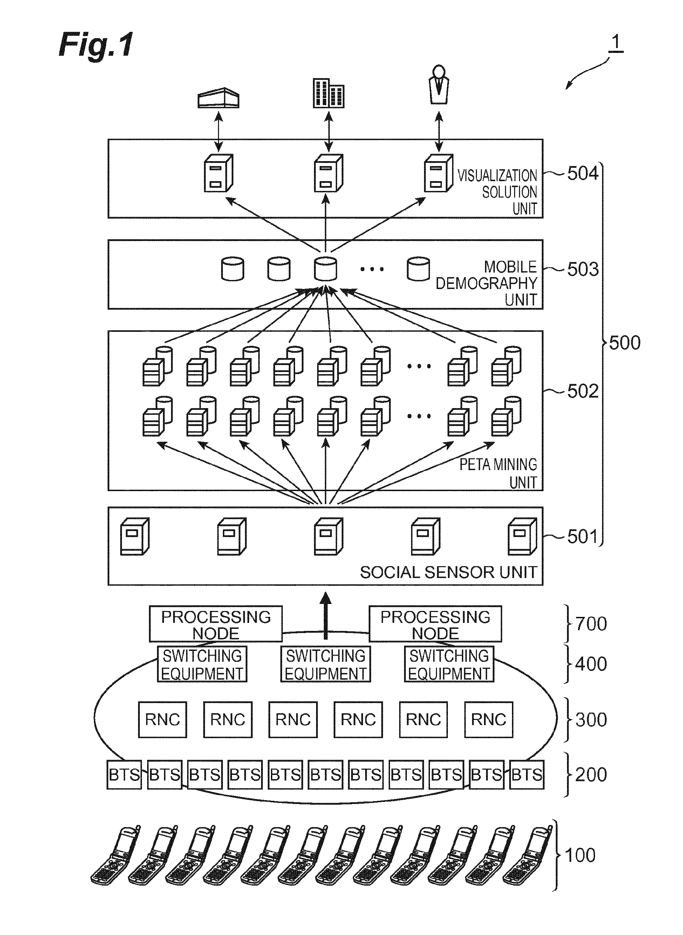

Fig. 1 is a system configuration diagram of a communication system 1 according to a first embodiment. As shown in Fig. 1, the communication system 1 according to the first embodiment includes a mobile terminal (which is a mobile phone, for example, and equivalent to "terminal" in CLAIMS) 100, a BTS (Base Transceiver Station) 200, an RNC (Radio Network Controller) 300, a switching equipment 400, various types of processing nodes 700, and a control center 500. Further, the control center 500 includes a social sensor unit 501, a peta mining unit 502, a mobile demography unit 503, and a visualization solution unit 504.

The switching equipment 400 collects first location information and second location information, which are described later, for the mobile terminal 100 through the BTS 200 and the RNC 300. The switching equipment 400 stores the collected first location information and second location information and outputs the collected first location information and second location information to the control center 500 at predetermined timing or in response to a request from the control center 500.

The various types of processing nodes 700 acquire the first location information and the second location information of the mobile terminal 100 through the RNC 300 and the switching equipment 400 and, in some cases, performs recalculation of the location or the like, and outputs the collected location information to the control center 500 at predetermined timing or in response to a request from the control center 500.

The mobile terminal 100 transmits the first location information at first intervals (for example, at intervals of 54 minutes). The first location information is location registration information, for example, and accumulated in the social sensor unit 501, which is described later, through the BTS 200, the RNC 300 and the switching equipment 400. The first location information contains a terminal ID (which is equivalent to "terminal identification information" in CLAIMS) that can identify the mobile terminal 100 and an area ID (which is equivalent to "area identification information" in CLAIMS) that can identify an area where the mobile terminal 100 is located. The first location information may further contain first time information, which is described later. Note that the area is a sector, which is the area of influence of an antenna of the BTS 200, for example. Further, the mobile terminal 100 may transmit the first location information not only at first intervals but also at other timing (for example, at the time of moving across an area, at the time of transmission etc.).

Further, some of the mobile terminals 100 transmit the second location information at second intervals (for example, at intervals of 5 minutes) that is shorter than the above-described first intervals. The second location information is GPS information, for example, and accumulated in the social sensor unit 501, which is described later, through the BTS 200, the RNC 300 and the switching equipment 400. However, if the second location information of the mobile terminal 100 is GPS information, the various type of processing nodes 700 can acquire the GPS information of the mobile terminal 100 without through the RNC 300 and the switching equipment 400. The acquisition of the GPS information is described later. The second location information contains a terminal ID hat can identify the mobile terminal 100 and coordinate information (which is equivalent to "location information" in CLAIMS) indicating the latitude and longitude of the mobile terminal 100.

The latitude and longitude of the mobile terminal 100 are acquired using the function (GPS etc.) incorporated in the mobile terminal 100. The second location information may further contain second time information, which is described later. Note that the mobile terminal 100 may transmit the second location information not only at second intervals but also at other timing (for example, at the time of using a service with GPS information, at the time when an inquiry about GPS information is made by a user etc.).

As for the collection of GPS information, a GPS information collection unit, which is not shown, included in the social sensor unit 501 or the mobile demography unit 503 collects longitude information and latitude information indicating the location of each mobile terminal 140 transmitted from each mobile terminal 100. Note that the GPS information collection unit may accumulate the collected longitude information and latitude information of the mobile terminal 100 together with a user identifier of the mobile terminal 100 and positioning time information as GPS information into a GPS information accumulation unit, which is not shown, included in the peta mining unit 502, for example.

The social sensor unit 501 is a server device that accumulates data containing the first location information and the second location information of the mobile equipment 100 and the like. The social sensor unit 501 acquires and accumulates data in response to a data reception request from the switching equipment 400 or by transmitting a data transmission request to the switching equipment 400.

The peta mining unit 502 is a server device that converts the data received from the social sensor unit 501 into a predetermined data format. For example, the peta mining unit 502 performs sorting using an identifier as a key or sorting by area. The area range estimation device 10 according to this embodiment is constructed in the peta mining unit 502, for example, and calculates the number of terminals corresponding to a terminal number estimation target (which is a terminal number estimation target area and a time period in this example).

The mobile demography unit 503 is a server device that performs aggregation and statistics analysis processing and space analysis processing of the data processed in the peta mining unit 502.

The visualization solution unit 504 is a server device that processes the data aggregated in the mobile demography unit 503 into visible. For example, the visualization solution unit 504 can map the aggregated data onto a map. Note that the data processed in the visualization solution unit 504 is provided to corporations, government and other public offices or individuals and used for retail development, road traffic survey, disaster risk management, environmental protection and the like. Note that the statistically processed information is processed so as not to identify individuals as a matter of course.

It should be noted that the social sensor unit 501, the peta mining unit 502, the mobile demography unit 503 and the visualization solution unit 504 are server devices as described above, and they have a basic configuration of a typical information processing device (specifically, CPU, RAM, ROM, an input device such as a keyboard and a mouse, a communication device that performs communication with the outside, a storage device that stores information, an output device such as a display and a printer) as a matter of course, though not shown.

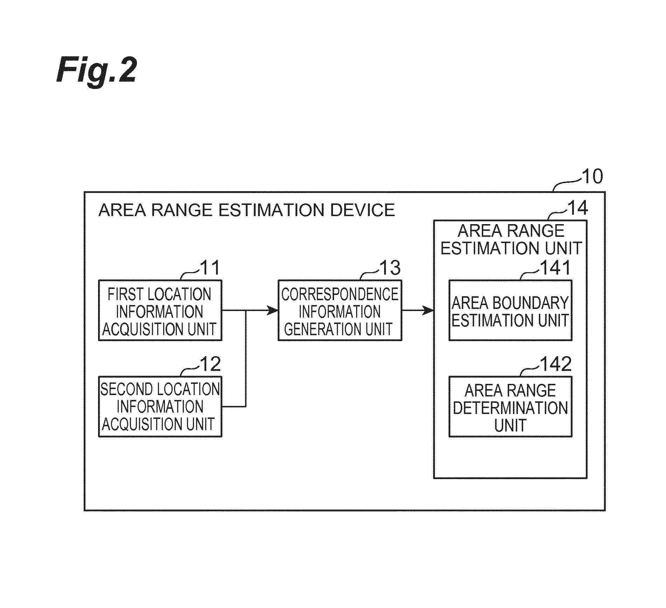

The functions of the area range estimation device 10 are described hereinafter. Fig. 2 is a block diagram showing a functional configuration of the area range estimation device 10. As shown in Fig. 2, the area range estimation device 10 includes a first location information acquisition unit 11 (which is equivalent to "first location information acquisition means" in CLAIMS), a second location information acquisition unit 12 (which is equivalent to "second location information acquisition means" in CLAIMS), a correspondence information generation unit 13 (which is equivalent to "correspondence information generation means" in CLAIMS), and an area range estimation unit 14 (which is equivalent to "area range estimation means" in CLAIMS).

The first location information acquisition unit 11 functions as a first location information acquisition means that acquires the first location information containing a terminal ID and an area ID. The first location information containing a terminal ID and an area ID is acquired by an external device (for example, any unit of the control center 500) of the area range estimation device 10 and accumulated in a first accumulation unit, which is not shown. The first accumulation unit may be included in the area range estimation device 10 or placed outside the area range estimation device 10. The first location information acquisition unit 11 acquires the first location information from the first accumulation unit and manages the information by storing it into a first location information management table.

The first location information may contain first time information indicating the time when the first location information is acquired. The first time information may be the time when any unit of the control center 500 has acquired the first location information, for example. Further, the first time information may be information indicating the time related to transmission and reception of the first location information, such as the time when the mobile terminal 100 has transmitted the first location information, and the time given in any device of the communication system 1 may be used. Note that, when first observation target information containing at least one of observation target period information containing a set of the start time and the end time for grasping the state of stay and observation area information is input from the outside, the first location information acquisition unit 11 may acquire the first location information in the observation target period and the observation area of the input first observation target information. The observation area information is given as an area ID, a geographical range (for example, municipalities) or the like. Further, the first location information acquisition unit 11 may acquire the first location information on a regular basis.

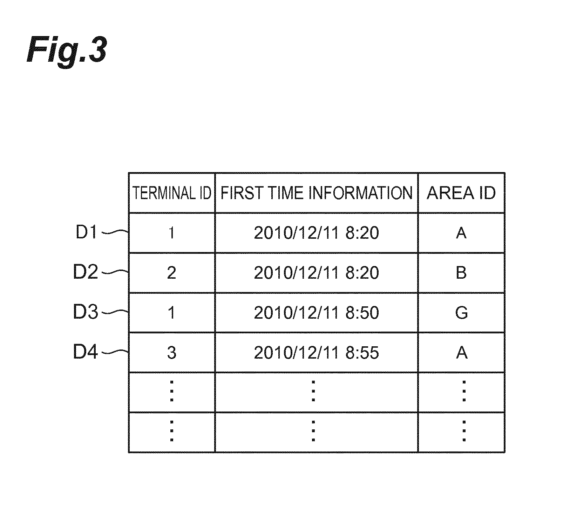

Fig. 3 is a view showing an example of the first location information management table. The first location information management table contains the first location information associating a terminal ID, first time information, and an area ID. The terminal ID is identification information for identifying the mobile terminal 100 that has transmitted the first location information as described above. The first time information indicates the time when the first location information is acquired as described above. The area ID is identification information for identifying the first location registration area where the mobile terminal 100 that has transmitted the first location information has been located at the time of transmitting the first location information as described above.

The second location information acquisition unit 12 functions as a second location information acquisition means that acquires the second location information containing a terminal ID and coordinate information. The second location information containing a terminal ID and coordinate information is acquired by an external device (for example, any unit of the control center 500) of the area range estimation device 10 and accumulated in a second accumulation unit, which is not shown. The second accumulation unit may be the above-described GPS information accumulation unit, for example, and included in the area range estimation device 10 or placed outside the area range estimation device 10. The second location information acquisition unit 12 acquires the second location information from the second accumulation unit and manages the information by storing it into a second location information management table.

The second location information may contain second time information indicating the time when the second location information is acquired. The second time information may be the time when any unit of the control center 500 has acquired the second location information, for example. Further, the second time information may be information indicating the time related to transmission and reception of the second location information, such as the time when the mobile terminal 100 has transmitted the second location information, and the time given in any device of the communication system 1 may be used. Note that, when second observation target information containing at least one of observation target period information containing a set of the start time and the end time for grasping the state of stay and observation range information is input from the outside, the second location information acquisition unit 12 may acquire the second location information in the observation target period and the observation range of the input second observation target information. The observation area information is given as latitude and longitude, a geographical range (for example, municipalities) or the like. Further, the second location information acquisition unit 12 may acquire the second location information on a regular basis.

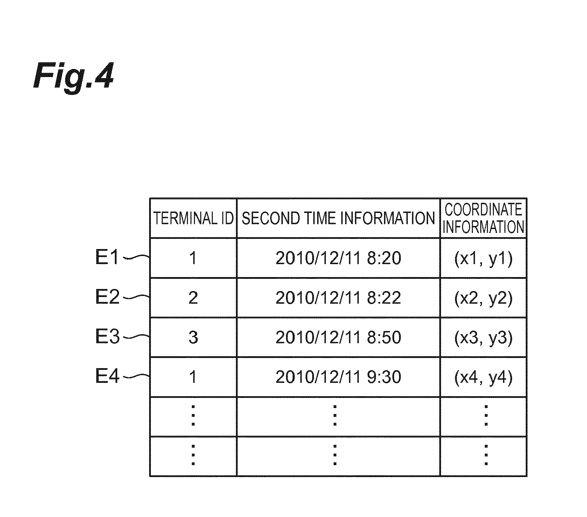

Fig. 4 is a view showing an example of the second location information management table. The second location information management table contains the second location information associating a terminal ID, second time information, and coordinate information. The terminal ID is identification information for identifying the mobile terminal 100 that has transmitted the second location information as described above. The second time information indicates the time when the second location information is acquired as described above. The coordinate information indicates the coordinates of a location where the mobile terminal 100 that has transmitted the second location information has been located at the time of transmitting the second location information as described above.

The correspondence information generation unit 13 functions as a correspondence information generation means that generates correspondence information based on the area ID and the coordinate information using the first location information acquired by the first location information acquisition unit 11 and the second location information acquired by the second location information acquisition unit 12. To be more specific, the correspondence information generation unit 13 extracts the first location information and the second location information having the same terminal ID from the first location information stored in the first location information management table and the second location information stored in the second location information management table.

The correspondence information generation unit 13 then calculates a time difference between the time indicated by the first time information contained in the first location information and the time indicated by the second time information contained in the second location information. The correspondence information generation unit 13 determines whether the calculated time difference is within a predetermined specified value (for example, 5 minutes). When the time difference is within the specified value, the correspondence information generation unit 13 generates correspondence information associating the area ID contained in the first location information, the coordinate information contained in the second location information, and time difference information indicating the calculated time difference and stores the correspondence information into the correspondence information management table. Note that the specified value may be a value corresponding to the shorter one of a first cycle of a registration process of the first location information by the mobile terminal 100 and a second cycle of a registration process of the second location information by the mobile terminal 100. In this manner, the correspondence between the area ID and the coordinate information is estimated based on the first location information and the second location information acquired by different positioning methods and positioning timing, and the correspondence information associating the area ID and the coordinate information is generated.

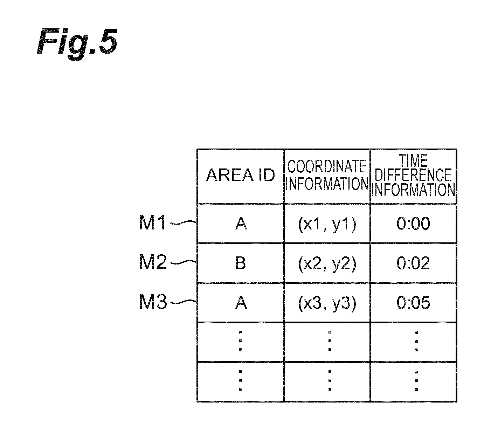

A generation process of the correspondence information is specifically described hereinafter using the first location information management table in Fig. 3 and the second location information management table in Fig. 4. The correspondence information generation unit 13 extracts first location information D2 and second location information E2 both having the terminal ID "2" from the first location information management table in Fig. 3 and the second location information management table in Fig. 4. Then, the correspondence information generation unit 13 calculates a time difference between the time "2010/12/11 8:20" indicated by the first time information of the first location information D2 and the time "2010/12/11 8:22" indicated by the second time information of the second location information E2. In this case, because the time difference is 2 minutes, the correspondence information generation unit 13 stores correspondence information M2 (see Fig. 5) associating the area ID "B" of the first location information D2, the coordinate information "(x2,y2)" of the second location information E2 and the time difference "0:02" into the correspondence information management table.

On the other hand, the correspondence information generation unit 13 extracts first location information D1, first location information D3, second location information E1 and second location information E4 all having the terminal ID "1" from the first location information management table in Fig. 3 and the second location information management table in Fig. 4. Then, the correspondence information generation unit 13 calculates each time difference between the time "2010/12/11 8:20" indicated by the first time information of the first location information D1, the time "2010/12/11 8:20" indicated by the second time information of the second location information E1, and the time "2010/12/11 9:30" indicated by the second time information of the second location information E4. Because there is no time difference between the time indicated by the first time information of the first location information D1 and the time indicated by the second time information of the second location information E1, the correspondence information generation unit 13 stores correspondence information M1 (see Fig. 5) associating the area ID "A" of the first location information D1, the coordinate information "(x1,y1)" of the second location information E1 and the time difference "0:00" into the correspondence information management table.

Further, because a time difference between the time indicated by the first time information of the first location information D1 and the time indicated by the second time information of the second location information E4 is 70 minutes, the correspondence information generation unit 13 does not generate the correspondence information. Likewise, the correspondence information generation unit 13 calculates each time difference between the time "2010/12/11 8:50" indicated by the first time information of the first location information D3, the time "2010/12/11 8:20" indicated by the second time information of the second location information E1, and the time "2010/12/11 9:30" indicated by the second time information of the second location information E4. Because a time difference between the time indicated by the first time information of the first location information D3 and the time indicated by the second time information of the second location information E1 is 30 minutes, and a time difference between the time indicated by the first time information of the first location information D3 and the time indicated by the second time information of the second location information E4 is 40 minutes, the correspondence information generation unit 13 does not generate the correspondence information.

When there are a plurality of the second location information containing the second time information indicating the time whose time difference from the time indicated by the first time information of the first location information is within a specified value, the correspondence information generation unit 13 may generate the correspondence information for each of them or generate the correspondence information based on the second location information containing the second time information indicating the time with the smallest time difference.

Fig. 5 is a view showing an example of the correspondence information management table. The correspondence information management table contains the correspondence information associating the area ID, the coordinate information and the time difference information. The area ID is information acquired from the first location information as described above. The coordinate information is information acquired from the second location information as described above. The time difference information is information indicating a time difference between the time indicated by the first time information associated with the area ID and the time indicated by the second time information associated with the coordinate information. Further, the correspondence information generation unit 13 may acquire the time when the correspondence information is generated and add third time information indicating that time to the correspondence information.

The area range estimation unit 14 functions as an area range estimation means that estimates an area range based on the correspondence information generated by the correspondence information generation unit 13. The area range estimation unit 14 includes an area boundary estimation unit 141 and an area range determination unit 142.

The area boundary estimation unit 141 functions as an area boundary estimation means that estimates the boundary of an area based on the correspondence information generated by the correspondence information generation unit 13. To be specific, the area boundary estimation unit 141 reads the correspondence information stored in the correspondence information management table. Then, the area boundary estimation unit 141 estimates the boundary from an adjacent area based on the area ID and the coordinate information contained in the correspondence information. The estimation of the area boundary is performed on the basis of known clustering such as kNN, SVM and Bayesian techniques, for example (each clustering technique is described in "Kenichiro Ishii, "Wakariyasui Pattern Recognition". Ohmsha, Ltd, ISBN 4-274-13149-1, 1998", "Mingzhe Jin ed., "Data Science Learning Through R", Morikita Publishing Co., Ltd., ISBN 4-627-09601-1, 2007" and the like.

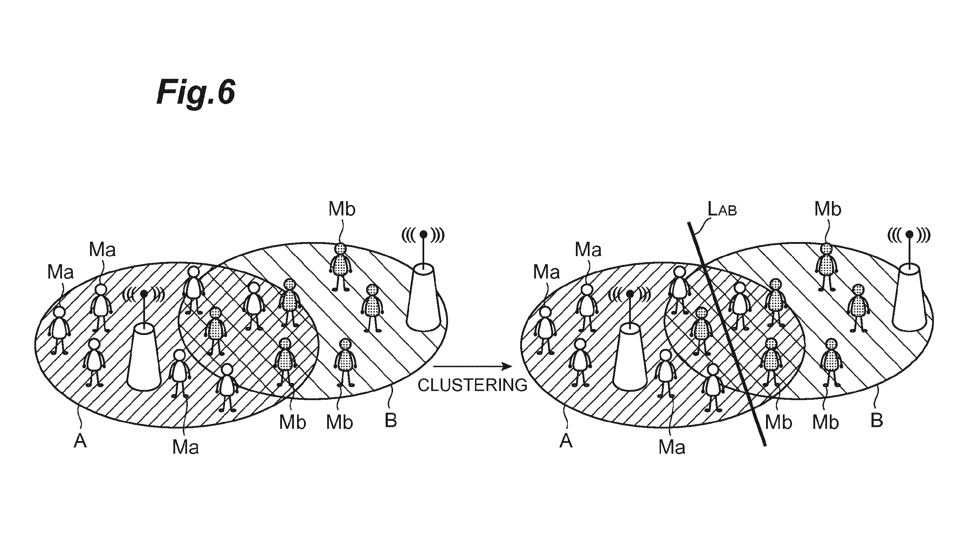

Fig. 6 is a view showing an example of estimation of an area boundary. As shown in Fig. 6, a boundary L_{AB} between an area A and an area B is estimated based on the coordinate position of correspondence information Ma whose area ID indicates the area A and the coordinate position of correspondence information Mb whose area ID indicates the area B. Note that the boundary may be linear or nonlinear according to the clustering technique used.

The area range determination unit 142 functions as an area range determination means that determines an area range based on the boundary of the area estimated by the area boundary estimation unit 141. To be specific, the area range determination unit 142 determines the area range of a certain area by combining all of the boundaries between that area and adjacent areas. Then, the area range determination unit 142 generates estimated area information associating an area ID and area range information about the area range of the area indicated by the area ID. Note that the area range information is represented by a combination of coordinates indicating boundaries with adjacent areas, a combination of functions indicating boundary lines with adjacent areas or the like.

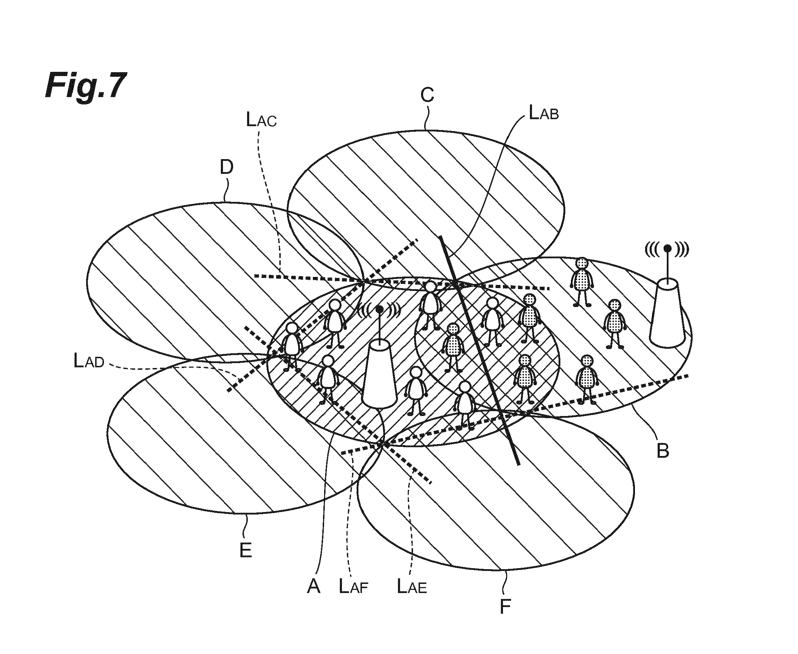

Fig. 7 is a view showing an example of the determined area range. In the example of Fig. 7, the area A is adjacent to the area B, an area C, an area D, an area E and an area F. The area boundary L_{AB}, an area boundary L_{AC}, an area boundary L_{AD}, an area boundary L_{AE} and an area boundary L_{AF} are boundary lines between the area A and the area B, an area C, an area D, an area E and an area F, respectively, estimated by the area boundary estimation unit 141. The area range determination unit 142 determines the area range of the area A as a range enclosed by the area boundary L_{AB}, the area boundary L_{AC}, the area boundary L_{AB}, the area boundary L_{AB} and the area boundary L_{AF}.

The area range estimation unit 14 supplies the estimated area information generated by the area range determination unit 142 to any unit of the control center 500 or a server device or the like outside the control center 500. Note that, in the case of using the Bayesian method or the like, it is possible to estimate the area range in one estimation process without sequentially estimating the boundaries with each of the adjacent areas.

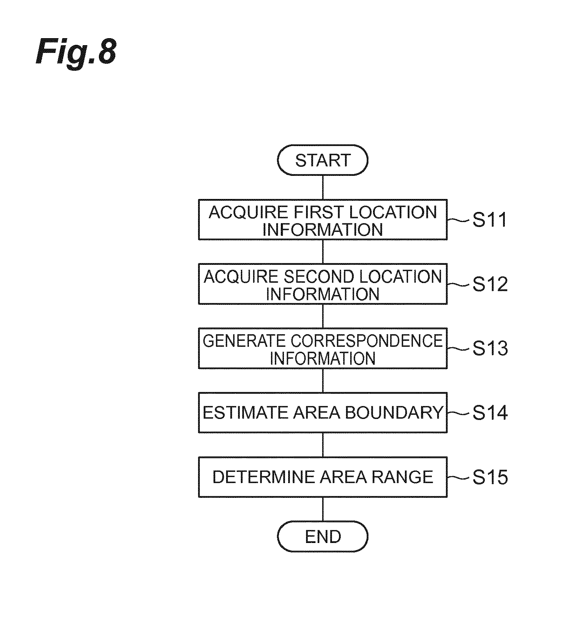

The operation of the area range estimation device 10 is described hereinafter with reference to Fig. 8. Fig. 8 is a flowchart showing an area range estimation process of the area range estimation device 10.

First, the first location information acquisition unit 11 acquires the first location information and stores it into the first location information management table (S11, first location information acquisition step). Further, the second location information acquisition unit 12 acquires the second location information and stores it into the second location information management table (S 12, second location information acquisition step).

Next, the correspondence information generation unit 13 extracts the first location information acquired by the first location information acquisition unit 11 and the second location information acquired by the second location information acquisition unit 12 having the same terminal ID. The correspondence information generation unit 13 then calculates a time difference between the time indicated by the first time information contained in the extracted first location information and the time indicated by the second time information contained in the extracted second location information. When the time difference is within a specified value, the correspondence information generation unit 13 generates the correspondence information associating the area ID contained in the first location information, the coordinate information contained in the second location information and the calculated time difference, and stores it into the correspondence information management table (S13, correspondence information generation step).

Then, the area boundary estimation unit 141 estimates the boundary between areas based on the correspondence information stored in the correspondence information management table (S 14, area range estimation step). After all of the boundaries between adjacent areas are estimated by the area boundary estimation unit 141, the area range determination unit 142 determines the area range of the area based on the estimated boundaries (S 15, area range estimation step).

Effects of the area range estimation device 10 are described hereinafter. In the area range estimation device 10, the first location information acquisition unit 11 acquires the first location information containing the terminal ID that identifies the mobile terminal 100 and the area ID that identifies the located area of the mobile terminal 100. Further, the second location information acquisition unit 12 acquires the second location information containing the terminal ID and the coordinate information indicating the location of the mobile terminal 100. Then, the correspondence information generation unit 13 generates the correspondence information based on the area ID and the coordinate information by using the first location information acquired by the first location information acquisition unit 11 and the second location information acquired by the second location information acquisition unit 12, and the area range estimation unit 14 estimates the range of the area identified by the area ID based on the correspondence information generated by the correspondence information generation unit 13.

By generating the correspondence information based on the area ID indicating the area where the mobile terminal 100 is located and the coordinate information indicating the location where the mobile terminal 100 is located, it is possible to associate the area where the mobile terminal 100 has made registration of the first location information and the location where the mobile terminal 100 has made registration of the second location information. Then, by estimating the area range based on the correspondence information, it is possible to reflect the relationship of the area ID and the coordinate information on the estimation of the area range of the area identified by the area ID. This allows more appropriate estimation of the area range. It is thus possible to estimate the population (the number of terminals) in a certain geographical range, improve the accuracy of aggregation, analysis and the like and thereby improve the radio quality.

Further, in the area range estimation device 10, the first location information acquisition unit 11 acquires the first location information associating further with the first time information indicating the time when the first location information is acquired, and the second location information acquisition unit 12 acquires the second location information associating further with the second time information indicating the time when the second location information is acquired. Then, the correspondence information generation unit 13 extracts the first location information and the second location information having the same terminal ID and having a time difference between the time indicated by the first time information and the time indicated by the second time information that is within a specified value, and generates the correspondence information based on the area ID of the first location information and the coordinate information of the second location information.

It is thereby possible to obtain the highly reliable correspondence information. It is thus possible to estimate the area range more accurately.

Further, in the area range estimation device 10, when the first observation target information containing at least one of the observation target period information indicating a period to be observed and the observation area information indicating an area to be observed is input from the outside, the first location information acquisition unit 11 may acquire the first location information based on the first observation target information. Likewise, when the second observation target information containing at least one of the observation target period information indicating a period to be observed and the observation range information indicating a geographical range (for example, coordinate range) to be observed is input from the outside, the second location information acquisition unit 12 may acquire the second location information based on the second observation target information.

Note that, even when one of the first observation target information and the second observation target information is input, not only when both of them are input from the outside, the first location information acquisition unit 11 and the second location information acquisition unit 12 can acquire the first location information and the second location information, respectively. For example, when the first observation target information is input, the second location information acquisition unit 12 converts the area indicated by the observation area information of the first observation target information into the observation range information based on area range information about the area range of the area indicated by the area ID. Then, the second location information acquisition unit 12 acquires the second location information included in the geographical range.

On the other hand, when the second observation target information is input, the first location information acquisition unit 11 converts the geographical range indicated by the observation range information of the second observation target information into the observation area information based on area range information about the area range of the area indicated by the area ID. Then, the first location information acquisition unit 11 acquires the first location information of the area indicated by the observation area information.

As described above, upon input of at least one of the first observation target information and the second observation target information, it is possible to generate the correspondence information in a desired time range or geographical range. This allows reduction of the load to generate the correspondence information.

### (Second Embodiment)

In the above first embodiment, an example in which the area range estimation unit 14 estimates an area range based on the correspondence information stored in the correspondence information management table is described. However, in the case where the first location information and the second location information are registered in different times, there is a possibility that the area ID contained in the first location information and the coordinate information contained in the second location information do not correspond. As a time difference between the first location information and the second location information is larger, the reliability of the correspondence information decreases. The correspondence information with low reliability can cause an error in estimating an area range. In the following second embodiment, an example in which estimation of an area range is performed in accordance with the reliability of the correspondence information, which is an example in which an area range is estimated after correcting the coordinate information of the correspondence information in accordance with the time difference of the correspondence information, is described. Note that the system configuration of a communication system according to the second embodiment is the same as the system configuration according to the first embodiment in Fig. 1, and the description of the system configuration is omitted.

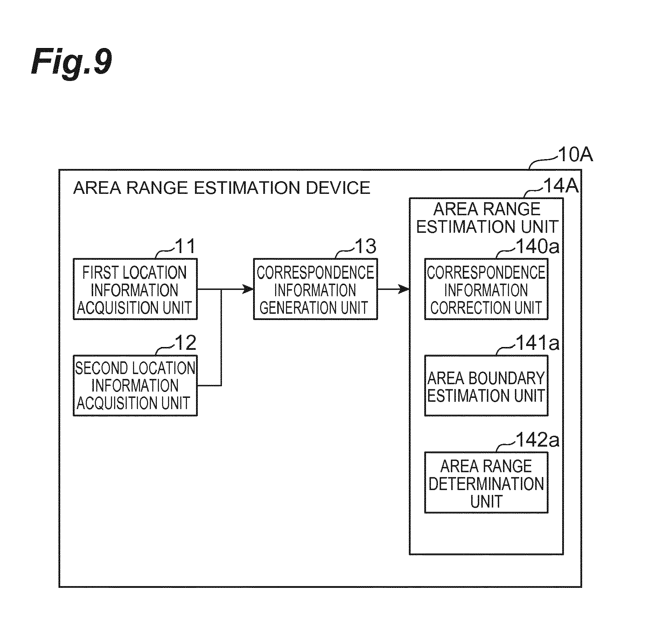

The functions of an area range estimation device 10A according to the second embodiment are described hereinafter. Fig. 9 is a block diagram showing the functional configuration of the area range estimation device 10A. As shown in Fig. 9, the area range estimation device 10A includes the same elements as the area range estimation device 10 according to the first embodiment, and the functions of the respective elements are substantially the same, and therefore differences from the area range estimation device 10 according to the first embodiment are mainly described below. The area range estimation device 10A includes an area range estimation unit 14A in place of the area range estimation unit 14 in the area range estimation device 10.

The area range estimation unit 14A corrects the coordinate information of the correspondence information in accordance with the time difference indicated by the time difference information of the correspondence information and then estimates the area range. The area range estimation unit 14A includes a correspondence information correction unit 140a, an area boundary estimation unit 141a, and an area range determination unit 142a.

The correspondence information correction unit 140a corrects the coordinate information using the time difference information contained in the correspondence information. The correspondence information correction unit 140a corrects the coordinate position indicated by the coordinate information of the correspondence information in accordance with the time difference indicated by the time difference information contained in the correspondence information, for example. To be specific, the correspondence information correction unit 140a extracts the correspondence information having the same area ID from the correspondence information management table. The correspondence information correction unit 140a calculates the average of the coordinate positions indicated by the coordinate information of the extracted correspondence information and thereby calculates the center of gravity position of the area indicated by the area ID.

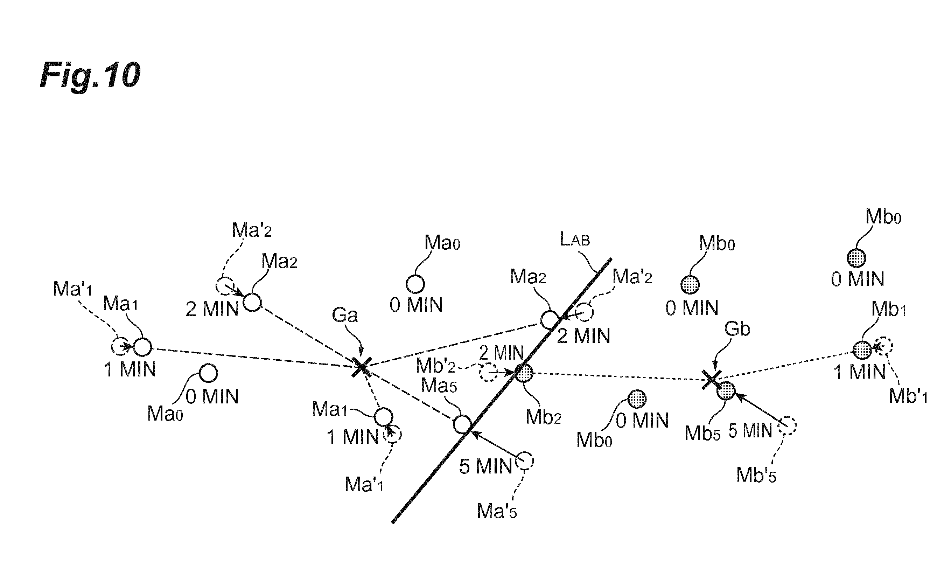

Next, the correspondence information correction unit 140a shifts the coordinate position indicated by the coordinate information of the correspondence information toward the center of gravity position of the area indicated by the area ID of the correspondence information in accordance with the time difference indicated by the time difference information of the extracted correspondence information. As the time difference is larger, the distance of the shift of the coordinate position is larger. Fig. 10 is a view showing an example of correction of correspondence information in accordance with the time difference. In Fig. 10, correspondence information Ma₀ is the correspondence information whose area ID indicates the area A and whose time difference information indicates a time difference of 0 minute. Correspondence information Ma₁ is the correspondence information whose area ID indicates the area A and whose time difference information indicates a time difference of 1 minute.

Correspondence information Ma₂ is the correspondence information whose area ID indicates the area A and whose time difference information indicates a time difference of 2 minutes. Correspondence information Ma₅ is the correspondence information whose area ID indicates the area A and whose time difference information indicates a time difference of 5 minutes. Likewise, correspondence information Mb₀ is the correspondence information whose area ID indicates the area B and whose time difference information indicates a time difference of 0 minute. Correspondence information Mb₁ is the correspondence information whose area ID indicates the area B and whose time difference information indicates a time difference of 1 minute.

Correspondence information Mb₂ is the correspondence information whose area ID indicates the area B and whose time difference information indicates a time difference of 2 minutes. Correspondence information Mb₅ is the correspondence information whose area ID indicates the area B and whose time difference information indicates a time difference of 5 minutes. In Fig. 10, each of the above correspondence information is correspondence information after correction (after shift). Further, correspondence information Ma'₁, correspondence information Ma'₂, correspondence information Ma'₅, correspondence information Mb'₁, correspondence information Mb'₂ and correspondence information Mb'₅ are the correspondence information before correction (before shift) of the correspondence information Ma₁, the correspondence information Ma₂, the correspondence information Ma₅, the correspondence information Mb₁, the correspondence information Mb₂ and the correspondence information Mb₅, respectively.

The center of gravity position Ga is a position indicating the average of the coordinate positions indicated by the coordinate information of all the correspondence information whose area ID indicates the area A. The center of gravity position Gb is a position indicating the average of the coordinate positions indicated by the coordinate information of all the correspondence information whose area ID indicates the area B. The area boundary L_{AB} is the estimated boundary line between the area A and the area B.

The correspondence information correction unit 140a does not shift the positions of the correspondence information Ma₀ and the correspondence information Mb₀. The correspondence information correction unit 140a makes shift from the coordinate position of the correspondence information Ma'₁ before correction toward the center of gravity position Ga by 100 m, for example, which makes the correspondence information Ma₁. The correspondence information correction unit 140a makes shift from the coordinate position of the correspondence information Ma'₂ before correction toward the center of gravity position Ga by 200 m, for example, which makes the correspondence information Ma₂. The correspondence information correction unit 140a makes shift from the coordinate position of the correspondence information Ma'₅ before correction toward the center of gravity position Ga by 500 m, for example, which makes the correspondence information Ma₅. The correspondence information correction unit 140a makes shift from the coordinate position of the correspondence information Mb'₁ before correction toward the center of gravity position Gb by 100 m, for example, which makes the correspondence information Mb₁.

The correspondence information correction unit 140a makes shift from the coordinate position of the correspondence information Mb'₂ before correction toward the center of gravity position Gb by 200 m, for example, which makes the correspondence information Mb₂. The correspondence information correction unit 140a makes shift from the coordinate position of the correspondence information Mb'₅ before correction toward the center of gravity position Gb by 500 m, for example, which makes the correspondence information Mb₅. In this manner, in the example of Fig. 10, the correspondence information correction unit 140a shifts the coordinate position indicated by the coordinate information of the correspondence information toward the center of gravity by a distance proportional to a time difference.

Then, the area boundary estimation unit 141a estimates an area boundary based on the correspondence information associating the coordinate position after shift of each correspondence information and the area ID (which is equivalent to "corrected correspondence information" in CLAIMS). The estimation of the area boundary is performed on the basis of known clustering such as kNN, SVM and Bayesian techniques, for example. In the example of Fig. 10, the area boundary estimation unit 141a estimates the area boundary L_{AB} between the area A and the area B based on the corrected correspondence information. The area range determination unit 142a determines the area range based on the area boundaries estimated by the area boundary estimation unit 141a in the same manner as the area range determination unit 142.

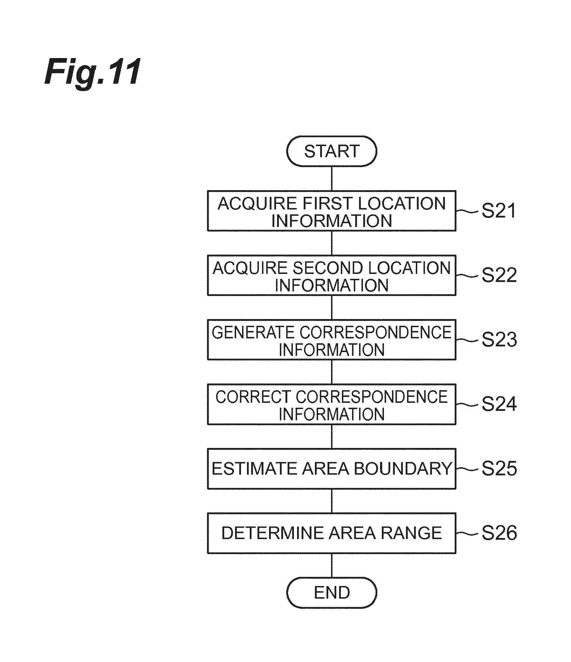

The operation of the area range estimation device 10A is described hereinafter with reference to Fig. 11. Fig. 11 is a flowchart showing an area range estimation process of the area range estimation device 10. The operation of the area range estimation device 10A is substantially the same as the operation of the area range estimation device 10. Differences from the area range estimation device 10 are mainly described below. Processing of S21 to S23 is respectively the same as processing of S11 to S13 in Fig. 8 and not redundantly described.

Next, the correspondence information correction unit 140a shifts a position indicated by the coordinate information of the correspondence information toward the center of gravity position of the area indicated by the area identification information of the correspondence information in accordance with the time difference indicated by the time difference information of the correspondence information (S24). Then, the area boundary estimation unit 141a estimates the boundary between areas based on the coordinate information indicating a position after shift and the area identification information (S25, area range estimation step). After all of the boundaries between adjacent areas are estimated by the area boundary estimation unit 141 a, the area range determination unit 142a determines the area range of the area based on the estimated boundaries (S26, area range estimation step).

In the above second embodiment, in the area range estimation device 10A, the area range estimation unit 14A corrects the coordinate information in accordance with the time difference in the correspondence information and estimates the range of the area identified by the area ID based on the corrected coordinate information and the area ID. It is thereby possible to change the degree of effect of the correspondence information on the estimation of an area range depending on the reliability of the correspondence information, thus estimating the area range more accurately.

### (Third Embodiment)

In the third embodiment, like the second embodiment, an example in which estimation of an area range is performed in accordance with the reliability of the correspondence information, which is an example in which an area range is estimated after correcting the correspondence information in accordance with the time difference of the correspondence information, is described. Note that the system configuration of a communication system according to the third embodiment is the same as the system configuration according to the first embodiment in Fig. 1, and the description of the system configuration is omitted. Further, the functional configuration of the area range estimation device 10A according to the third embodiment is substantially the same as the functional configuration according to the second embodiment in Fig. 9, and therefore differences from the area range estimation device 10A according to the second embodiment are mainly described below.

The correspondence information correction unit 140a according to the third embodiment assigns weights to the correspondence information in accordance with the time difference indicated by the time difference information contained in the correspondence information, for example. To be specific, the correspondence information correction unit 140a reads the time difference information of each of the correspondence information stored in the correspondence information management table. The correspondence information correction unit 140a increases the number of data of the correspondence information in accordance with the time difference indicated by the read time difference information. At this time, the correspondence information correction unit 140a increases the percentage of increase in the number of data of the correspondence information as the time difference is smaller. In other words, it increases the degree of weight on the correspondence information as the reliability is higher.

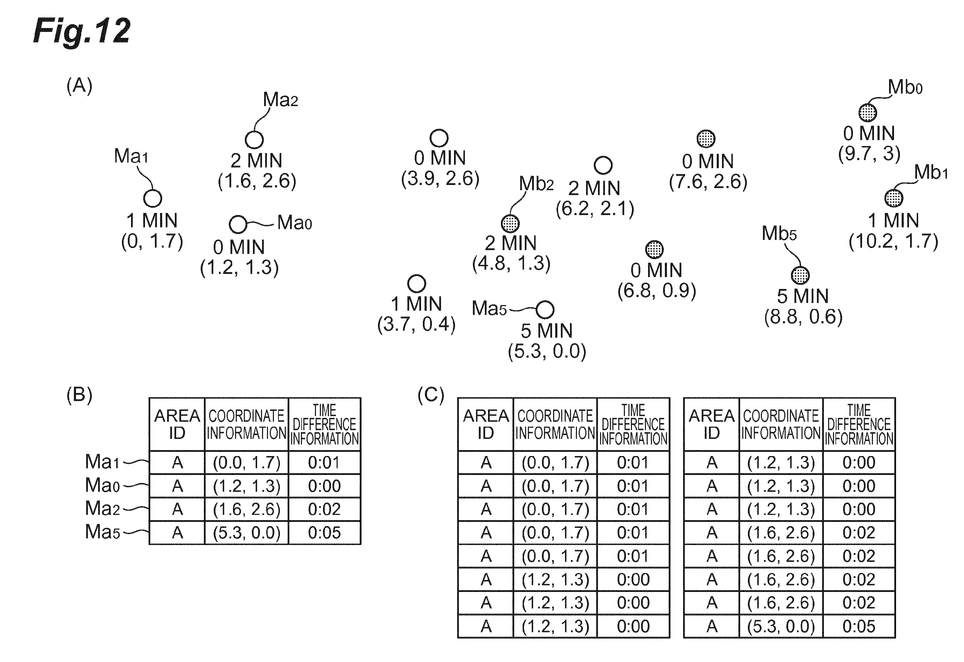

Fig. 12 is a view showing an example of weighting of correspondence information in accordance with the time difference. Fig. 12(A) is a view showing an example of layout of correspondence information, Fig. 12(B) is a view showing an example of correspondence information before weighting, and Fig. 12(C) is a view showing an example of correspondence information after weighting. In Fig. 12, the correspondence information Ma₀, the correspondence information Ma₁, the correspondence information Ma₂, the correspondence information Ma₅, the correspondence information Mb₀, the correspondence information Mb₁, the correspondence information R4b₂ and the correspondence information Mb₅ are respectively the same correspondence information as the correspondence information before correction in Fig. 10.

In the example of Fig. 12, the correspondence information correction unit 140a increases the number of data of correspondence information by one as the time difference decreases by one minute, for example. The correspondence information correction unit 140a does not change the number of data of the correspondence information Ma₅. The correspondence information correction unit 140a increases the number of data of the correspondence information Ma₂ four times. In other words, the correspondence information correction unit 140a adds three identical correspondence information to the correspondence information Ma₂. Likewise, the correspondence information correction unit 140a increases the number of data of the correspondence information Ma₁ five times and increases the number of data of the correspondence information Ma₀ six times. The correspondence information correction unit 140a performs weighting on (increases the number of data of) the correspondence information in Fig. 12(B) and thereby generates the correspondence information in Fig. 12(C). The correspondence information correction unit 140a performs weighting on the correspondence information Mb₀, the correspondence information Mb₁, the correspondence information Mb₂ and the correspondence information Mb₅ in the same manner and generates the corrected correspondence information.

Then, the area boundary estimation unit 141a estimates the area boundary based on the area ID and the coordinate position of the correspondence information on which weighting (increase in the number of data) is performed (which is equivalent to "corrected correspondence information" in CLAIMS). The estimation of the area boundary is performed on the basis of known clustering such as kNN, SVM and Bayesian techniques, for example.

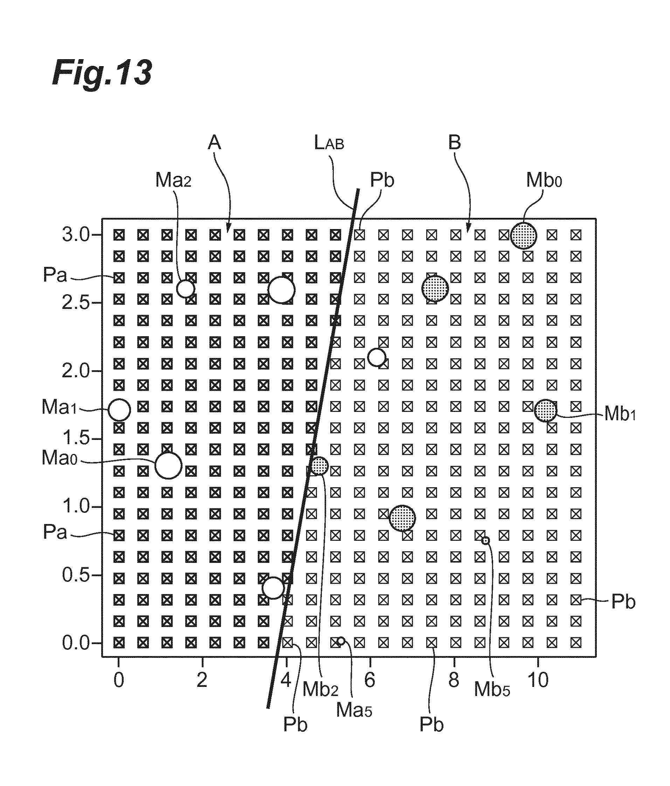

Fig. 13 is a view showing an area boundary in the case where the Bayesian method is used for the correspondence information (see Fig. 12(C)) after performing weighting on the correspondence information in Fig. 12(A). In Fig. 13, each correspondence information is shown as a circle having a radius corresponding to its number of data. For example, because there are six identical data of the correspondence information Ma₀, the correspondence information Ma₀ is shown as a circle having a radius six times larger than that of a circle indicating one data. Likewise, the correspondence information Ma₁, the correspondence information Ma₂ and the correspondence information Ma₅ are shown as circles respectively having radii five times, four times and one time larger than that of a circle indicating one data. This is the same for the correspondence information Mb₀, the correspondence information Mb₁, the correspondence information Mb₂ and the correspondence information Mb₅. The area boundary L_{AB} is the area boundary in the case where the Bayesian method is applied to the correspondence information in Fig. 12(C). As shown in Fig. 13, when the area boundary L_{AB} between the area A and the area B is estimated using the Bayesian method, the area boundary L_{AB} is linear.

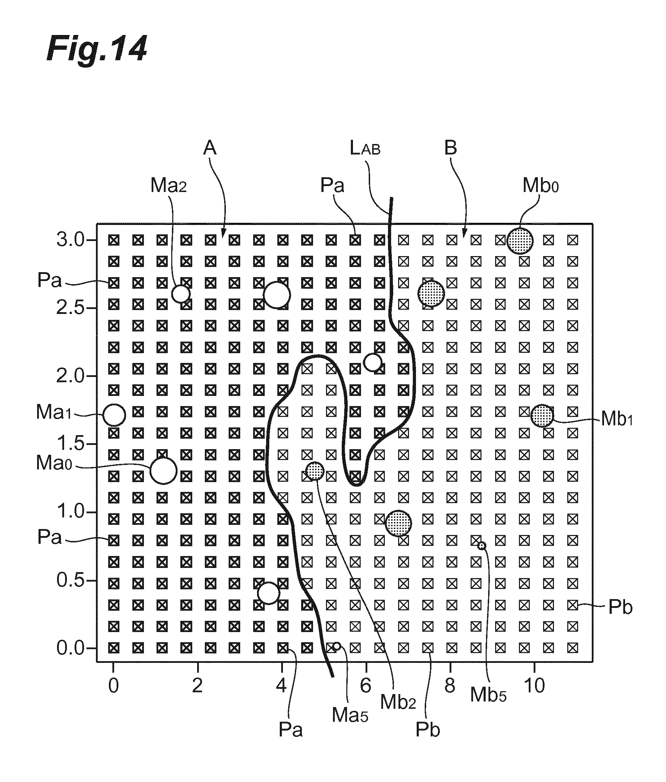

Fig. 14 is a view showing an area boundary in the case where the kNN method (k=3) is used for the correspondence information (see Fig. 12(C)) after performing weighting on the correspondence information in Fig. 12(A). In Fig. 14, like Fig. 13, each correspondence information is shown as a circle having a radius corresponding to its number of data. The area boundary L_{AB} is the area boundary in the case where the kNN method is applied to the correspondence information in Fig. 12(C). As shown in Fig. 14, when the area boundary L_{AB} between the area A and the area B is estimated using the kNN method, the area boundary L_{AB} is nonlinear. Note that, in Figs. 13 and 14, the coordinate position Pa indicates that the coordinate position belongs to the area A. Likewise, the coordinate position Pb indicates that the coordinate position belongs to the area B. In this manner, the area boundary can be estimated in accordance with the clustering technique in use.

The operation of the area range estimation device 10A according to the third embodiment is described hereinafter with reference to Fig. 11. The operation of the area range estimation device 10A according to the third embodiment is substantially the same as the operation of the area range estimation device 10A according to the second embodiment. Differences from the area range estimation device 10A according to the second embodiment are mainly described below. The correspondence information correction unit 140a according to the third embodiment increases the number of data of the correspondence information in accordance with the time difference indicated by the time difference information of the correspondence information in S23. The other processing is the same as that of the area range estimation device 10A according to the second embodiment and not redundantly described.

In the above third embodiment, in the area range estimation device 10A, the area range estimation unit 14A assigns weights to the coordinate information in accordance with the time difference in the correspondence information and estimates the range of the area identified by the area ID based on the weighted coordinate information and the area ID. It is thereby possible to change the degree of effect of the correspondence information on the estimation of an area range depending on the reliability of the correspondence information, thus estimating the area range more accurately.

### (Fourth Embodiment)

In the fourth embodiment, like the second embodiment, an example in which estimation of an area range is performed in accordance with the reliability of the correspondence information, which is an example in which an area range is estimated after correcting the correspondence information in accordance with the time difference of the correspondence information, is described. Note that the system configuration of a communication system according to the fourth embodiment is the same as the system configuration according to the first embodiment in Fig. 1, and the description of the system configuration is omitted. Further, the functional configuration of the area range estimation device 10A according to the fourth embodiment is substantially the same as the functional configuration according to the second embodiment in Fig. 9, and therefore differences from the area range estimation device 10A according to the second embodiment are mainly described below.

The correspondence information correction unit 140a according to the fourth embodiment assigns weights to the correspondence information in accordance with the time difference indicated by the time difference information contained in the correspondence information, for example. To be specific, the correspondence information correction unit 140a reads the time difference information of each of the correspondence information stored in the correspondence information management table. The correspondence information correction unit 140a calculates weights in accordance with the time difference indicated by the read time difference information and increases the number of data of the correspondence information based on the calculated weights. At this time, the correspondence information correction unit 140a increases the percentage of increase in the number of data of the correspondence information as the time difference is smaller. In other words, it increases the degree of weight on the correspondence information as the reliability is higher.

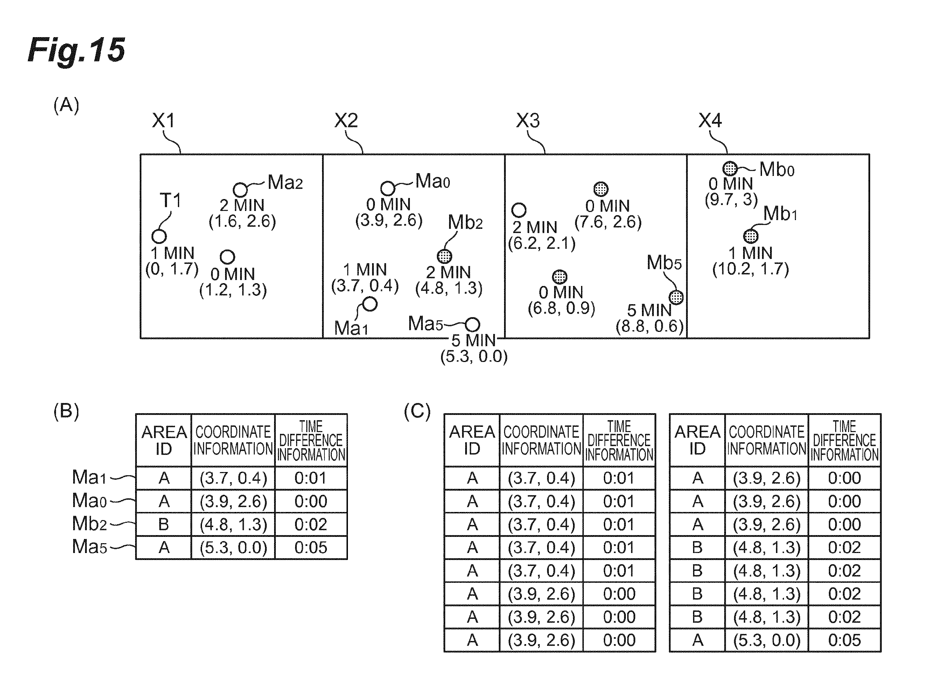

Fig. 15 is a view showing an example of weighting of correspondence information in accordance with the time difference. Fig. 15(A) is a view showing an example of layout of correspondence information, Fig. 15(B) is a view showing an example of correspondence information before weighting, and Fig. 15(C) is a view showing an example of correspondence information after weighting. In Fig. 15, the correspondence information Ma₀, the correspondence information Ma₁, the correspondence information Ma₂, the correspondence information Ma₅, the correspondence information Mb₀, the correspondence information Mb₁, the correspondence information Mb₂ and the correspondence information Mb₅ are respectively the same correspondence information as the correspondence information before correction in Fig. 10.

Fig. 15(A) shows the layout of the correspondence information whose area ID indicates the area A (which is the correspondence information shown by a white circle) and the layout of the correspondence information whose area ID indicates the area B (which is the correspondence information shown by a black circle) in area estimation unit regions X1 to X4. Note that the area estimation unit region is an area that is used for processing to estimate the range of the area identified by the area ID, and the estimation of an area boundary or the like is performed based on the state in each of the area estimation unit regions (the number of correspondence information for each area ID in this embodiment). Fig. 15(B) shows the correspondence information whose coordinate information is within the area estimation unit region X2. Fig. 15(C) shows the correspondence information after weights are assigned to the correspondence information whose coordinate information is within the area estimation unit region X2.

In the example of Fig. 15, the correspondence information correction unit 140a increases the number of data of correspondence information by one as the time difference decreases by one minute, for example. The correspondence information correction unit 140a does not change the number of data of the correspondence information Ma₅, Mb₅ (in this example, information about not increasing the number of data corresponds to a weight). The correspondence information correction unit 140a increases the number of data of the correspondence information Ma₂, Mb₂ four times (in this example, information of "four times" corresponds to a weight). In other words, the correspondence information correction unit 140a adds three identical correspondence information to the correspondence information Ma₂, Mb₂. Likewise, the correspondence information correction unit 140a increases the number of data of the correspondence information Ma₁, Mb₁ five times and increases the number of data of the correspondence information Ma₀, Mb₀ six times (in this example, information of "five times" and "six times" corresponds to a weight). The correspondence information correction unit 140a performs weighting on (increases the number of data of) the correspondence information whose coordinate information is within the area estimation unit region X2 in Fig. 15(B), for example, and thereby generates the correspondence information in Fig. 15(C). The correspondence information correction unit 140a generates the weighted correspondence information for all of the area estimation unit regions X1 to X4.

Then, the area boundary estimation unit 141a estimates the area boundary based on the correspondence information on which weighting (increase in the number of data) is performed. Specifically, the area boundary estimation unit 141 a first counts the number of correspondence information for each area ID with respect to each of the area estimation unit regions X1 to X4 based on the weighted correspondence information. Then, the area boundary estimation unit 141a extracts the area ID with the largest number of correspondence information for each of the area estimation unit regions X1 to X4, and estimates the extracted area ID as the area in each area estimation unit region. For example, in the case of counting the number of correspondence information for each area ID with respect to the area estimation unit region X2, by using the weighted correspondence information shown in Fig. 15(C), the number of the correspondence information whose area ID is A is 12, and the number of the correspondence information whose area ID is B is 4. Accordingly, the area estimation unit region X2 is estimated as the area estimation unit region having the area ID of A.

After that, the area boundary estimation unit 141a estimates the area boundary based on the estimated area ID of each of the area estimation unit regions X1 to X4. For example, when the area ID of the area estimation unit regions X1 and X2 is estimated as A and the area ID of the area estimation unit regions X3 and X4 is estimated as B, the boundary between the area estimation unit region X2 and the area estimation unit region X3 at which the area ID changes is estimated as the area boundary.

The operation of the area range estimation device 10A according to the fourth embodiment is described hereinafter with reference to Fig. 11. The operation of the area range estimation device 10A according to the fourth embodiment is substantially the same as the operation of the area range estimation device 10A according to the second embodiment. Differences from the area range estimation device 10A according to the second embodiment are mainly described below. The correspondence information correction unit 140a according to the fourth embodiment calculates a weight (information about how many folds to use for the correspondence information) in accordance with the time difference indicated by the time difference information of the correspondence information in S24 and increases the number of data of the correspondence information based on the calculated weight. In S25, the area boundary estimation unit 141a counts the number of correspondence information for each area ID with respect to each of the area estimation unit regions. The area boundary estimation unit 141 a then estimates the area ID of the area estimation unit region based on the number of correspondence information counted for each area ID. Then, the area boundary estimation unit 141a estimates the area boundary based on the estimated area ID. The other processing is the same as that of the area range estimation device 10A according to the second embodiment and not redundantly described.

In the above fourth embodiment, in the area range estimation device 10A, the area range estimation unit 14A assigns weights to the coordinate information in accordance with the time difference in the correspondence information and counts the number of correspondence information for each area ID. The area range estimation unit 14A then estimates the area ID of the area estimation unit region based on the counted number of correspondence information for each area ID and estimates the area boundary based on the estimated area ID of each area estimation unit region. In this manner, according to this embodiment, the area boundary can be estimated simply by counting the number of correspondence information for each area ID, and it is thus possible to easily perform the estimation of the area range.

Note that, although the number of correspondence information is counted for each area ID with respect to each of the area estimation unit regions in the fourth embodiment, the probability of the correspondence information having a specified area ID among the correspondence information in each area with respect to each of the area estimation unit regions may be calculated, rather than counting the number of correspondence information, and the area ID with the highest probability may be estimated as the area ID in the area estimation unit region. For example, in the case of calculating the probability that the correspondence information having a specified area ID is present for the area estimation unit region X2 shown in Fig. 15(A), because the total number of correspondence information is 16 as shown in Fig. 15(C), the probability that the correspondence information having the area ID of A is present is 12/16, and the probability that the correspondence information having the area ID of B is present is 4/16. Based on those probabilities, the area boundary estimation unit 141a may estimate that the area ID of the area estimation unit region X2 is A.

Note that, although the case where there are two types, A and B, of the area ID contained in the correspondence information is described in the fourth embodiment, the area boundary can be estimated in the same way as above when there are two or more types of the area ID. Specifically, the area ID of the largest number of correspondence information in the area estimation unit region is estimated as the area ID in the area estimation unit region, and the boundary at which the area ID changes between the area estimation unit regions is estimated as the area boundary.

Further, the amount of calculation of processing to estimate the area boundary and the accuracy of the estimated area boundary can be balanced out changing the size of the area estimation unit region. Furthermore, although the area estimation unit region is shown as an area enclosed in a rectangle in Fig. 15(A), the shape of the area estimation unit region is not limited to a rectangle.

### (Fifth Embodiment)

In the following fifth embodiment, like the second embodiment, an example in which estimation of an area range is performed in accordance with the reliability of the correspondence information is described. Note that the system configuration of a communication system according to the following embodiment is the same as the system configuration according to the first embodiment in Fig. 1, and the description of the system configuration is omitted. Further, the functional configuration of the area range estimation device 10A according to the following embodiment is substantially the same as the functional configuration according to the second embodiment in Fig. 9, and therefore differences from the area range estimation device 10A according to the second embodiment are mainly described below.

The correspondence information correction unit 140a according to the fifth embodiment calculates weights on the correspondence information in accordance with the time difference indicated by the time difference information contained in the correspondence information, for example. To be specific, the correspondence information correction unit 140a reads the time difference information of each of the correspondence information stored in the correspondence information management table. The correspondence information correction unit 140a then calculates weights in accordance with the time difference indicated by the read time difference information. Note that the correspondence information correction unit 140a assigns a greater weight as the time difference indicated by the read time difference information is smaller. In other words, it increases the degree of weight on the correspondence information as the reliability is higher.

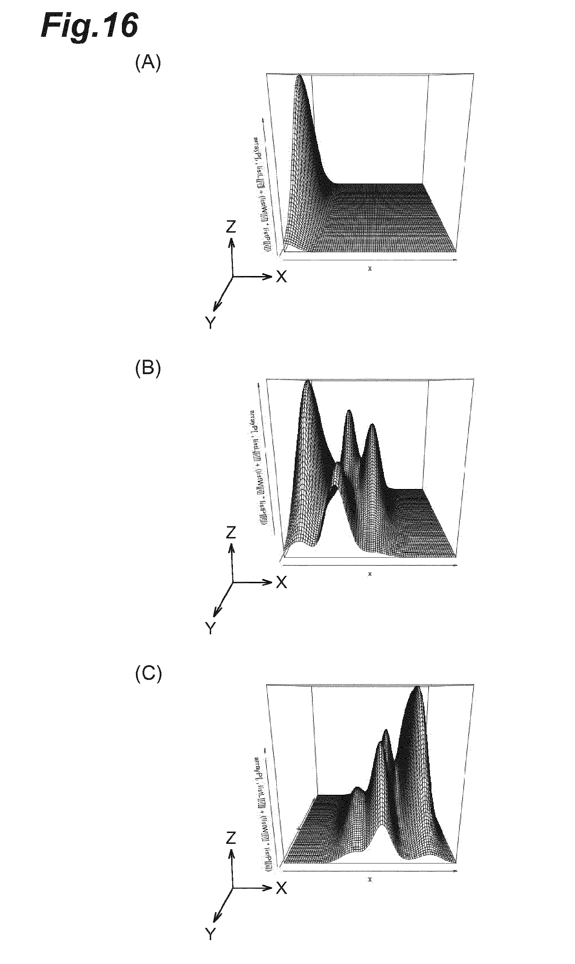

Next, the area boundary estimation unit 141a calculates the probability that the mobile terminal is present in the position indicated by the coordinate information contained in the correspondence information and its vicinity by using a specified probability density function. In this example, the case of using a probability density function for a normal distribution is described. Further, the probability that is calculated by the area boundary estimation unit 141a can be represented by a three-dimensional graph. Fig. 16 is a graph showing a probability density distribution. In Fig. 16, Z-axis indicates the probability, and the XY plane indicates the coordinate information contained in the correspondence information. For example, as for the correspondence information T1 shown in Fig. 15(A), the probability that the mobile terminal is present in the position indicated by the coordinate information of the correspondence information T1 and its vicinity can be represented as the graph of Fig. 16(A). As shown in Fig. 16(A), the probability that the mobile terminal is present is the highest at the position indicated by the coordinate information of the correspondence information T1, and the probability that the mobile terminal is present becomes lower toward the vicinity from the position of the coordinate information. Note that it is assumed that the sum of the presence probabilities of the mobile terminal (the sum of the probability density functions) calculated for the correspondence information T1 is 1. The sum of the probability density functions is also 1 in the case of calculating the presence probability of the mobile terminal for the other correspondence information as well.

Further, the area boundary estimation unit 141a reflects the weight calculated by the correspondence information correction unit 140a on the probability density function. For example, when the weight is reflected on the dispersion of the normal distribution so that the dispersion is inversely proportional to weight, the slope of the peak of the probability density distribution shown in Fig. 16(A) is steeper as the weight is greater. In this case, the probability density distribution is such that the mobile terminals are likely to concentrate on the position indicated by the coordinate information contained in the correspondence information. On the other hand, the slope of the peak of the probability density distribution shown in Fig. 16(A) is slower as the weight is smaller. In this case, the probability density distribution is such that the mobile terminals are likely to be dispersed over the whole area.

Likewise, the area boundary estimation unit 141a calculates the probability that the mobile terminal is present in the position indicated by the coordinate information contained in the correspondence information and its vicinity for each of the correspondence information. Then, it combines the probabilities calculated for the respective correspondence information and having the same area ID. The probabilities may be combined simply by adding them together, or may be combined in consideration of weights. For example, the probabilities respectively multiplied by the weight of the correspondence information may be combined. Fig. 16(B) shows a graph obtained by calculating the probability that the mobile terminal is present in the position indicated by the coordinate information of the correspondence information and its vicinity for each of the correspondence information having the area ID of A in Fig. 15(A) and combining the probabilities together. Fig. 16(C) shows a graph obtained by calculating the probability that the mobile terminal is present in the position indicated by the coordinate information of the correspondence information and its vicinity for each of the correspondence information having the area ID of B in Fig. 15(A) and combining the probabilities together.

As described above, by calculating the presence probability of the mobile terminal by using the probability density function, it is possible to calculate the presence probability of the mobile terminal at a given position. Further, by combining the presence probabilities of the mobile terminal for each area ID as shown in Figs. 16(B) and 16(C), it is possible to calculate the presence probability of the mobile terminal at a given position for each area ID.

The area range determination unit 142a estimates the area ID where the presence probability of the mobile terminal at a given position is high as the area ID at the given position based on the presence probability of the mobile terminal for each area ID calculated by the area boundary estimation unit 141a. In this manner, the area range determination unit 142a estimates the area IDs in a plurality of positions and estimates the area range based on the estimated area IDs.

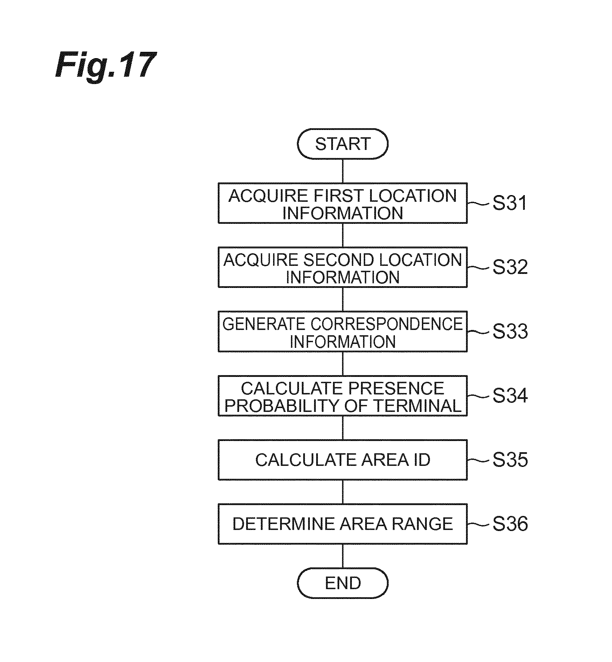

The operation of the area range estimation device 10A according to the fifth embodiment is described hereinafter with reference to Fig. 17. The operation of the area range estimation device 10A according to the fifth embodiment is substantially the same as the operation of the area range estimation device 10A according to the second embodiment. Differences from the area range estimation device 10A according to the second embodiment are mainly described below. Processing of S31 to S33 is respectively the same as processing of S21 to S23 in Fig. 11 and not redundantly described.

The correspondence information correction unit 140a according to the fifth embodiment calculates weights on the correspondence information, and the area boundary estimation unit 141a calculates the presence probability of the mobile terminal at a given position by using the probability density function for a given distribution on which the calculated weights are reflected in S34. The area range determination unit 142a calculates the area ID at a given position in S35. The area range determination unit 142a then estimates the area range based on the calculated area ID in S36.

In the above fifth embodiment, in the area range estimation device 10A, the area range estimation unit 14A calculates the probability that the terminal is present in the position indicated by the coordinate information contained in the correspondence information and its vicinity by using the probability density function for a given distribution on which the weights of the correspondence information are reflected. With use of the probability calculated in this manner, it is possible to calculate the presence probability of the mobile terminal at a given position for each area ID. Thus, by using the presence probability of the mobile terminal calculated for each area ID, the area ID at a given position can be estimated, thus estimating the range of the area identified by the area ID more accurately.

### (Sixth Embodiment)

In the sixth embodiment, like the second embodiment, an example in which estimation of an area range is performed in accordance with the reliability of the correspondence information, which is an example in which an area range is estimated after correcting the correspondence information in accordance with the time difference of the correspondence information, is described. Note that the system configuration of a communication system according to the sixth embodiment is the same as the system configuration according to the first embodiment in Fig. 1, and the description of the system configuration is omitted. Further, the functional configuration of the area range estimation device 10A according to the sixth embodiment is substantially the same as the functional configuration according to the second embodiment in Fig. 9, and therefore differences from the area range estimation device 10A according to the second embodiment are mainly described below.

The correspondence information correction unit 140a according to the sixth embodiment calculates weights on the correspondence information in accordance with the time difference indicated by the time difference information contained in the correspondence information, for example. For example, the weight can be represented by "weight=largest value of time difference - time difference of correspondence information +1" (this weight calculation formula can be used also for the other embodiments). In this case, the weight increases by one as the time difference decreases by one minute. In other words, the degree of weight on the correspondence information becomes larger as the reliability is higher. Note that the weight calculation formula is not limited to the above formula as a matter of course.

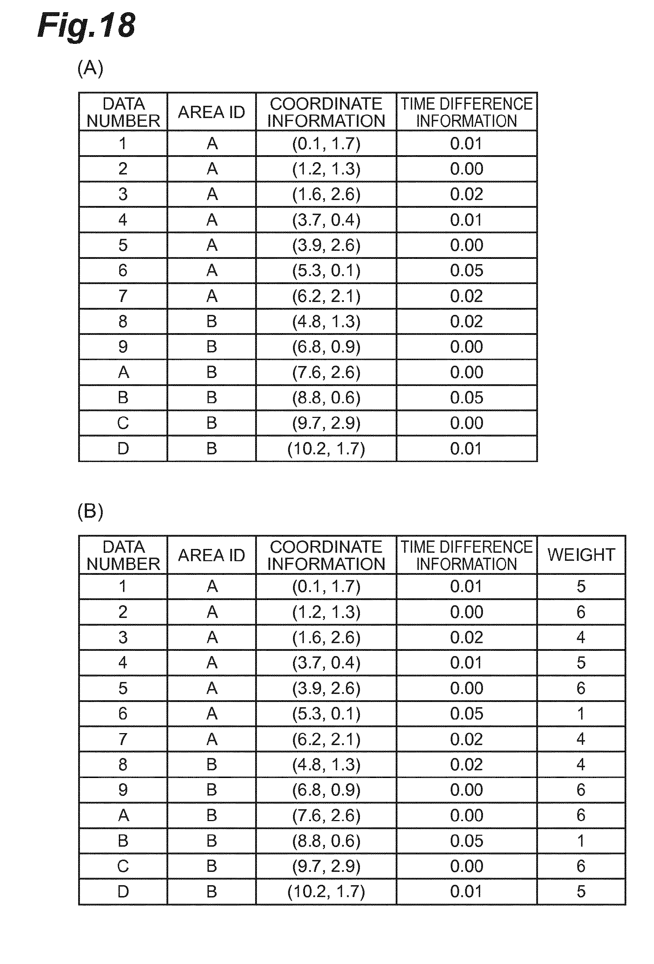

Fig. 18 is a view showing an example of correspondence information for which a weight is calculated. Fig. 18(A) shows an example of the correspondence information before a weight is calculated, and Fig. 18(B) shows an example of the correspondence information to which a weight is added. In Fig. 18, 13 correspondence information with the data number of 1 to 9 and A to D are shown. Note that the correspondence information with the data number of 1 to 7 has the area ID of A, and the correspondence information with the data number of 8, 9 and A to D has the area ID of B. In this example, the weight of the correspondence information with the data number of 2 and the time difference of 0:00 is 6, and the weight of the correspondence information with the data number of 6 and the time difference of 0:05, which is the largest, is 1.

Further, the correspondence information correction unit 140a newly generates a plurality of correspondence information whose positions are dispersed from one correspondence information. Specifically, when the correspondence information correction unit 140a generates dispersed correspondence information based on certain correspondence information, it generates a plurality of correspondence information (which is referred to hereinafter as "dispersed correspondence information") whose positions are dispersed according to the normal distribution centering on the position indicated by the coordinate information contained in the correspondence information. Specifically, a plurality of dispersed correspondence information can be generated by using random numbers according to the normal distribution generated using the Box-Muller's method. The dispersed correspondence information have the same area ID as the correspondence information based on which the dispersed correspondence information are generated. Further, the number of the newly generated dispersed correspondence information can be increased or reduced depending on a weight. For example, the dispersed correspondence information may be generated corresponding to the value of weight. In this case, for the correspondence information with the data number 1 (weight=5) of Fig. 18(B), the number of dispersed correspondence information newly generated using the normal distribution is 5.

For example, in the case of newly generating five dispersed correspondence information using the normal distribution for the correspondence information with the data number 1 in Fig. 18(B), the probability that the dispersed correspondence information having the coordinate information close to the coordinate position (0.1,1.7) shown in Fig. 18(B) are generated is high, and the probability that the dispersed correspondence information having the coordinate information away from the coordinate position (0.1,1.7) shown in Fig. 18(B) are generated is low. Therefore, the coordinate information of the newly generated five dispersed correspondence information are likely to concentrate on near the coordinate position (0.1,1.7).

Further, the correspondence information correction unit 140a generates the dispersed correspondence information by reflecting the weight of the correspondence information on the normal distribution. Specifically, the weight can be reflected on the dispersion of the normal distribution so that the dispersion is inversely proportional to weight. In this case, as the weight of the correspondence information is greater, the probability that the dispersed correspondence information having the coordinate information close to the position indicated by the coordinate information of the correspondence information are generated is higher. On the other hand, as the weight of the correspondence information is smaller, the probability that the dispersed correspondence information having the coordinate information close to the position indicated by the coordinate information of the correspondence information are generated is lower. Thus, when the weight of the correspondence information is small, the positions of the generated dispersed correspondence information are more widely dispersed.

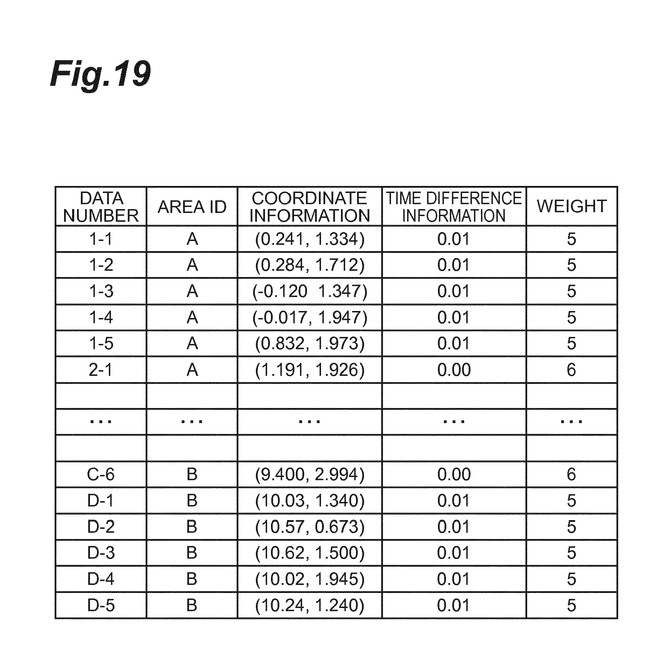

Fig. 19 is a view showing an example of dispersed correspondence information. In Fig. 19, the data numbers "1-1" to "1-5" correspond to a plurality of dispersed correspondence information generated for the data number 1 shown in Fig. 18 using the normal distribution. Specifically, the alphabetic character on the left of the data number of the dispersed correspondence information shown in Fig. 19 and the alphabetic character of the data number of the correspondence information shown in Fig. 18 correspond to each other.

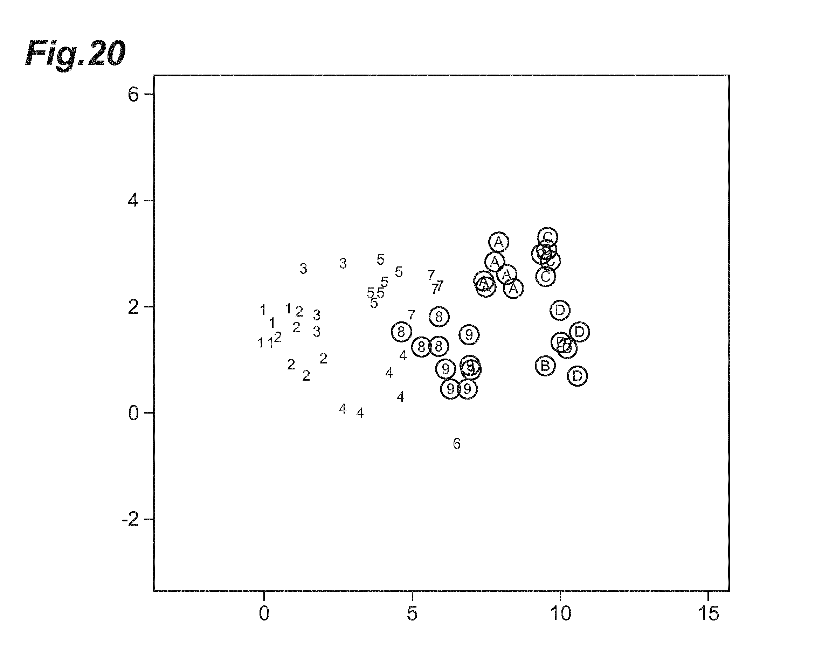

Fig. 20 is a view showing an example of layout of dispersed correspondence information shown in Fig. 19. In Fig. 20, the position of the dispersed correspondence information is indicated by showing only the numeric character on the left of the data number of the dispersed correspondence information in Fig. 19 on the coordinate system. Further, in Fig. 20, the correspondence information with the area ID of A ("1" to "7" in Fig. 20) is indicated by a normal numeric character, and the correspondence information with the area ID of B ("8", "9", "A" to "D" in Fig. 20) is indicated by an alphanumeric character enclosed in a circle.

In this manner, five dispersed correspondence information are generated as shown in Fig. 20 from the correspondence information with the data number of 1 shown in Fig. 18(B), for example, based on the weights of the correspondence information and the normal distribution on which the weights are reflected.

Next, the area boundary estimation unit 141a estimates the area boundary based on the dispersed correspondence information. As the estimation method of the area boundary, the method used in the fourth embodiment can be used. Specifically, the area boundary estimation unit 141a sorts the dispersed correspondence information by specified area estimation unit regions based on the coordinate information of the dispersed correspondence information. Then, it counts the number of correspondence information for each area ID with respect to each of the area estimation unit regions.

Then, the area boundary estimation unit 141a extracts the area ID with the largest number of correspondence information for each of the area estimation unit regions, and estimates the extracted area ID as the area in the area estimation unit region. The area boundary estimation unit 141a estimates the area boundary based on the extracted area ID of each area estimation unit region.

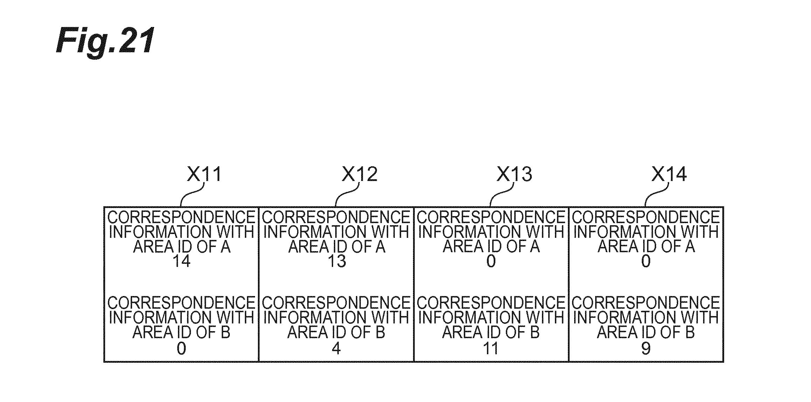

Fig. 21 is a view showing the number of correspondence information for each area ID in each of area estimation unit regions. It is assumed that, among the correspondence information corresponding to the area estimation unit region X11, the number of correspondence information with the area ID of A is 14 and the number of correspondence information with the area ID of B is 0 as shown in Fig. 21, for example. Likewise, among the correspondence information corresponding to the area estimation unit region X12, the number of correspondence information with the area ID of A is 13 and the number of correspondence information with the area ID of B is 4; among the correspondence information corresponding to the area estimation unit region X13, the number of correspondence information with the area ID of A is 0 and the number of correspondence information with the area ID of B is 11; and among the correspondence information corresponding to the area estimation unit region X14, the number of correspondence information with the area ID of A is 0 and the number of correspondence information with the area ID of B is 9.

In the example of Fig. 21, the area boundary estimation unit 141a estimates the area ID of the area estimation unit region X11 as A. Likewise, the area boundary estimation unit 141 a estimates the area ID of the area estimation unit region X12 as A, estimates the area ID of the area estimation unit region X13 as B, and estimates the area ID of the area estimation unit region X14 as B. The area boundary estimation unit 141a thereby estimates the boundary between the area estimation unit region X12 and the area estimation unit region X13 at which the area ID changes as the area boundary. Note that, although the case where the area boundary estimation method used in the fourth embodiment is used also in this embodiment is described, any method such as the area boundary estimation method used in the first to third embodiments may be used.

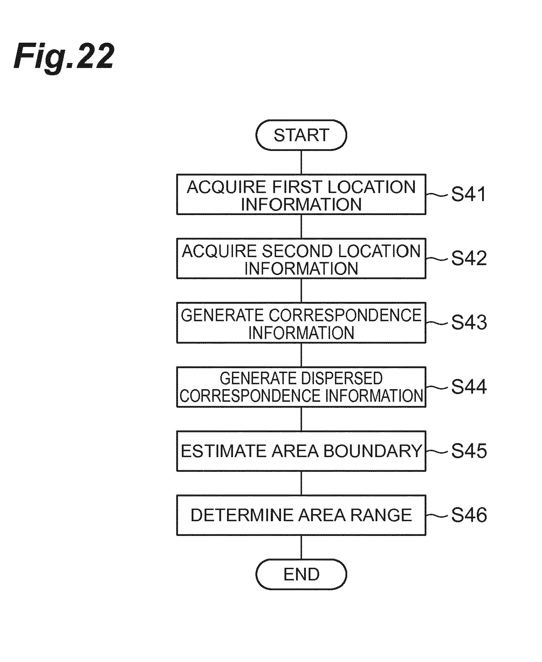

The operation of the area range estimation device 10A according to the sixth embodiment is described hereinafter with reference to Fig. 22. The operation of the area range estimation device 10A according to the sixth embodiment is substantially the same as the operation of the area range estimation device 10A according to the second embodiment. Differences from the area range estimation device 10A according to the second embodiment are mainly described below. Processing of S41 to S43 and S46 in Fig. 22 is respectively the same as processing of S21 to S23 and S26 in Fig. 11 and not redundantly described.

The correspondence information correction unit 140a according to the sixth embodiment calculates weights based on the time difference indicated by the time difference information of the correspondence information and generates the dispersed correspondence information based on the calculated weights and the normal distribution on which the weights are reflected in S44. After the dispersed correspondence information is generated for all of the correspondence information, the area boundary estimation unit 141a estimates the area boundary based on the dispersed correspondence information in S45.

In the above sixth embodiment, in the area range estimation device 10A, the area range estimation unit 14A generates a plurality of dispersed correspondence information from the correspondence information based on the weights of the correspondence information and the normal distribution on which the weights are reflected, and it is thereby possible to accurately increase the number of correspondence information to be used as basis for estimating the range of the area identified by the area ID, thus estimating the range of the area identified by the area ID more accurately.

Note that, although the number of dispersed correspondence information generated from correspondence information is increased or decreased based on the weights of the correspondence information in the sixth embodiment, the number of dispersed correspondence information to be generated may be fixed regardless of weights.

Further, although the normal distribution is used in the fifth and sixth embodiments, it is not limited thereto, and any distribution may be used such as Laplace distribution, for example, may be used.

### (Alternative Example of Correspondence Information Generation Unit)

The correspondence information generation unit 13 according to the first to sixth embodiments generates the correspondence information associating the area ID contained in the first location information, the coordinate information contained in the second location information, and the time difference information indicating the calculated time difference; however, the correspondence information may be generated by another way. An alternative example of the correspondence information generation process performed by the correspondence information generation unit 13 is described hereinbelow.

In this alternative example, the correspondence information generation unit 13 estimates the location (coordinate information) of the mobile terminal 100 at the time indicated by the first time information contained in the first time information based on the second location information, and generates the correspondence information based on the estimated coordinate information and the area ID contained in the first location information.

The first location information contains the area ID but does not contain the coordinate information indicating the position where the mobile terminal 100 has been located when the first location information has been acquired. On the other hand, the second location information contains the coordinate information indicating the position where the mobile terminal 100 has been located when the second location information has been transmitted. Thus, when estimating the location of the mobile terminal 100 at the time indicated by the first time information in certain specified first time information, the correspondence information generation unit 13 first extracts a specified number of second location information in which the time indicated by the second time information is earlier than the time indicated by the first time information in the specified first time information and further extracts a specified number of second location information in which the time indicated by the second time information is later than the time indicated by the first time information in the specified first time information, the extracted second location information having the same terminal ID as the terminal ID contained in the specified first time information. Accordingly, the time indicated by the first time information in the first time information is temporally between the times indicated by the second time information in the two second location information that are successive in time among the specified number of extracted second location information. Then, the location of the mobile terminal 100 at the time indicated by the first time information in the first time information is estimated by interpolation between the locations indicated by the coordinate information of the specified number of extracted second location information.

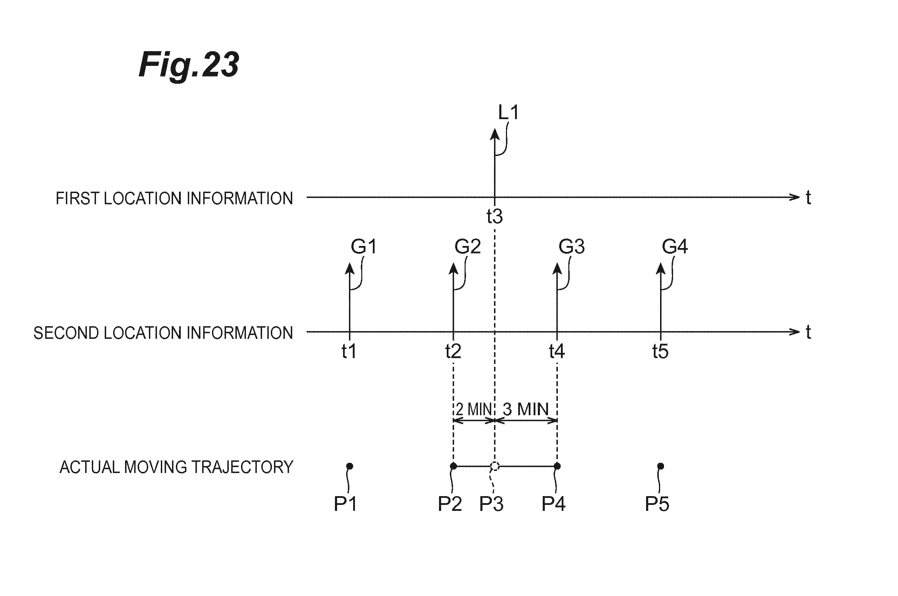

A specific example of estimating the location of the mobile terminal 100 by linear interpolation is described hereinbelow. Fig. 23 shows a relationship between the timing when the first location information and the second location information are acquired and the actual moving trajectory of the mobile terminal. Note that, in Fig. 23, the first location information L1 is acquired at time t3, the second location information G1 is acquired at time t1, the second location information G2 is acquired at time t2, the second location information G3 is acquired at time t4, and the second location information G4 is acquired at time t5. It is assumed that the first location information L1 and the second location information G1 to G4 have the same terminal ID.

Further, in Fig. 23, the actual locations of the mobile terminal that has transmitted the first location information L1 and the second location information G1 to G4 at time t1 to t5 are indicated by positions P1 to P5, respectively. Note that the locations of the positions P1, P2, P4 and P5 can be acquired by the coordinate information contained in the second location information G1, G2, G3 and G4. In this alternative example, the position P3 of the mobile terminal 100 when the first location information L1 is acquired is estimated by linear interpolation.

First, the correspondence information generation unit 13 extracts the second location information G2 containing the second time information indicating the time that is earlier than and the closest to the time t3 indicated by the first time information of the first location information L1, and the second location information G3 containing the second time information indicating the time that is later than and the closest to the time t3. At this time, the correspondence information generation unit 13 extracts the second location information having the same terminal ID as the first location information L1. Then, the correspondence information generation unit 13 sets the coordinate information contained in the second location information G2, G3 as the coordinate information of the positions P2 and P4 at the time t2, t4.

Then, the correspondence information generation unit 13 calculates a time difference between the time t2 indicated by the second time information of the second location information G2 and the time t3 indicated by the first time information of the first location information L1. It is assumed in this example that the time difference between the time t2 and the time t3 is 2 minutes. Likewise, the correspondence information generation unit 13 calculates a time difference between the time t3 indicated by the first time information of the first location information L1 and the time t4 indicated by the second time information of the second location information G3. It is assumed in this example that the time difference between the time t3 and the time t4 is 3 minutes. Based on the coordinate information of the positions P2 and P4, the time difference (2 minutes) between the time t2 and the time t3 and the time difference (3 minutes) between the time t3 and the time t4 obtained as above, the position P3 of the mobile terminal 100 at the time t3 is estimated by linear interpolation. Specifically, it is assumed that the mobile terminal 100 that is located in the position P2 at the time t2 has moved linearly from the position P2 to the position P4, and the time taken to move from the position P2 to the position P4 is 5 minutes, which is a time difference between the time t2 and the time t4. Then, by the ratio (which is 2:3 in this example) of the time difference (2 minutes) between the time t2 and the time t3 and the time difference (3 minutes) between the time t3 and the time t4, a line segment that linearly connects the position P2 and the position P4 is proportionally divided, and the coordinates of the divided position are calculated, thereby estimating the coordinates of the position P3 of the mobile terminal 100 at the time t3.

Note that the correspondence information generation unit 13 extracts the second location information which is acquired at the time that is the closest to the time t3 indicated by the first time information of the first location information L1 (in this example, it is the second location information G2 acquired at the time t2). Then, the correspondence information generation unit 13 calculates a time difference (2 minutes in this example) between the time t2 indicated by the second time information contained in the extracted second location information G2 and the time t3 indicated by the first time information of the frst location information L1. When the time difference is not within a predetermined specified value (for example, 5 minutes), the correspondence information generation unit 13 may refrain from generating the correspondence information for the first location information L1.

Then, the correspondence information generation unit 13 generates the correspondence information by associating the area ID contained in the first location information L1 and the coordinate information of the mobile terminal 100 at the time indicated by the first time information of the first location information L1, which is estimated by linear interpolation. Further, the correspondence information generation unit 13 calculates a time difference between the time indicated by the second time information and the time indicated by the first time information as time difference information and associates the time difference information to the correspondence information.

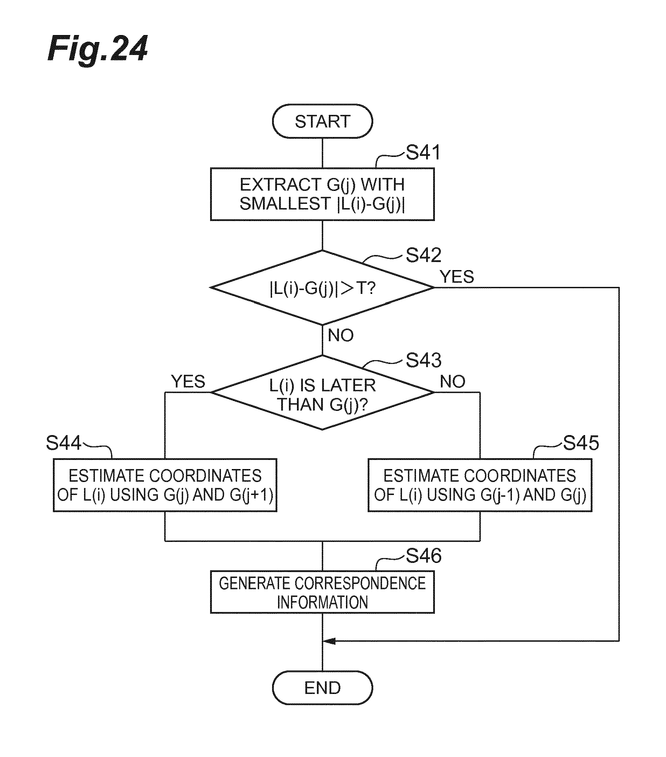

A flow of the process for the correspondence information generation unit 13 to generate the correspondence information in this alternative example is described hereinafter. Fig. 24 is a flowchart showing the correspondence information generation process performed by the correspondence information generation unit 13 in this alternative example. Note that the correspondence information generation process shown in Fig. 24 is performed for all of the first location information acquired by the first location information acquisition unit 11.

In the case of performing the correspondence information generation process for certain specified first location information L(i) (where i=1,2,3, ...), the correspondence information generation unit 13 first extracts second location information G(j) (where j=1,2,3, ...) where the absolute value of a time difference between the first time information of the first location information L(i) and the second time information of the second location information G(j) is the smallest (S41). Then, the correspondence information generation unit 13 calculates a time difference between the first time information of the first location information L(i) and the second time information of the second location information G(j) and determines whether the absolute value of the calculated time difference is larger than a predetermined specified value T (for example, 5 minutes) (S42).

When the absolute value of a time difference between the first time information of the first location information L(i) and the second time information of the extracted second location information G(j) is larger than the specified value T (YES in S42), the correspondence information generation unit 13 does not generate the correspondence information for the first location information L(i) and the process ends. On the other hand, when the absolute value of a time difference between the first time information of the first location information L(i) and the second time information of the extracted second location information G(j) is equal to or smaller than the specified value T (NO in S42), the correspondence information generation unit 13 determines whether the time indicated by the first time information of the first location information L(i) is later than the time indicated by the second time information of the extracted second location information G(j) (S43).

When the time indicated by the first time information of the first location information L(i) is later than the time indicated by the second time information of the extracted second location information G(j) (YES in S43), the correspondence information generation unit 13 estimates the coordinates of the first location information L(i) by linear interpolation as described above using the second location information G(j) and the second location information G(j+1) (S44). On the other hand, when the time indicated by the first time information of the first location information L(i) is not later than the time indicated by the second time information of the extracted second location information G(j) (NO in S43), the correspondence information generation unit 13 estimates the coordinates of the first location information L(i) by linear interpolation as described above using the second location information G(j-1) and the second location information G(j) (S45).

Then, the correspondence information generation unit 13 generates the correspondence information by associating the area ID contained in the first location information L(i), the coordinate information estimated by the linear interpolation, and the time difference calculated in S42 (S46). The process after generating the correspondence information is the same as that of the first to third embodiments described above.

As described above, in this alternative example, by estimating the coordinates of the mobile terminal 100 at the time indicated by the first time information of the first location information based on the second location information, the coordinates of the mobile terminal 100 at the time when the first location information is acquired can be obtained more accurately. By generating the correspondence information using the coordinate information estimated in this manner, it is possible to obtain the highly reliable correspondence information.

Note that, although the coordinate information of the mobile terminal 100 at the time when the first location information is acquired is estimated by performing linear interpolation in the above-described alternative example, it may be estimated by a method other than the linear interpolation. As one example, the estimation may be made by spline interpolation, Bezier interpolation or the like using k number of second location information before and after the time when the first location information is acquired.

### (Seventh Embodiment)

In the following seventh and eighths embodiments, an example in which an estimated value (the number of terminals) in each area, which is a unit of aggregation, is converted into an estimated value in each unit of output (which is a mesh in this example) is described. In the seventh embodiment, a process in the environment where the communication area of an outdoor base station using a single frequency band exists is described.

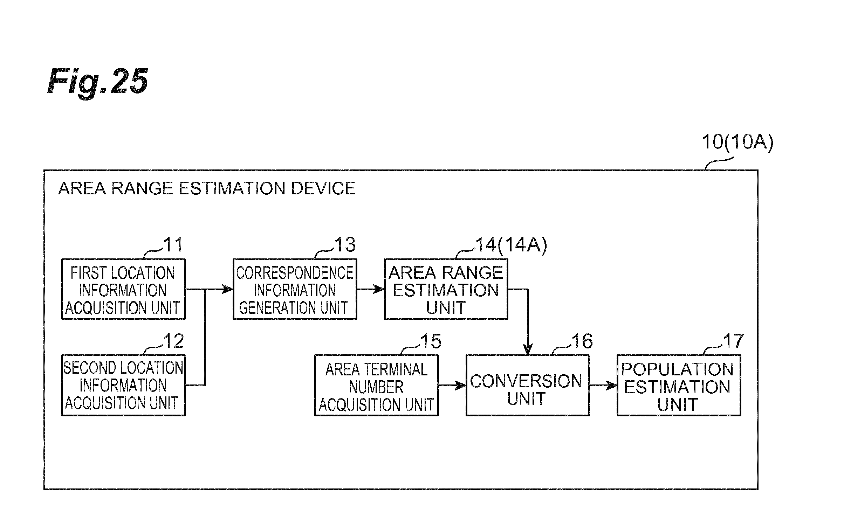

The area range estimation device 10, 10A according to the first to sixth embodiments may further include an area terminal number acquisition unit 15 (which is equivalent to "area terminal number acquisition means" in CLAIMS) that acquires the number of terminals in an area identified by the area ID and a conversion unit 16 (which is equivalent to "conversion means" in CLAIMS) that converts the number of terminals in the area acquired by the area terminal number acquisition unit 15 into the number of terminals in a specified partition based on the positional relationship between the area range of the area estimated by the area range estimation unit 14 and the partition recreated based on a specified partition rule (for example, two-dimensional mesh, cities and towns etc.) as shown in Fig. 25. The case of using a mesh as a partition is described hereinbelow.

The area terminal number acquisition unit 15 functions as an area terminal number acquisition means that acquires the number of the mobile terminals 100 located in an area identified by the area ID. The area terminal number acquisition unit 15 acquires the number of terminals estimated in an external server device, for example. The number of terminals may be estimated in any unit of the control center 500, and the area terminal number acquisition unit 15 may acquire the number of terminals from the unit.

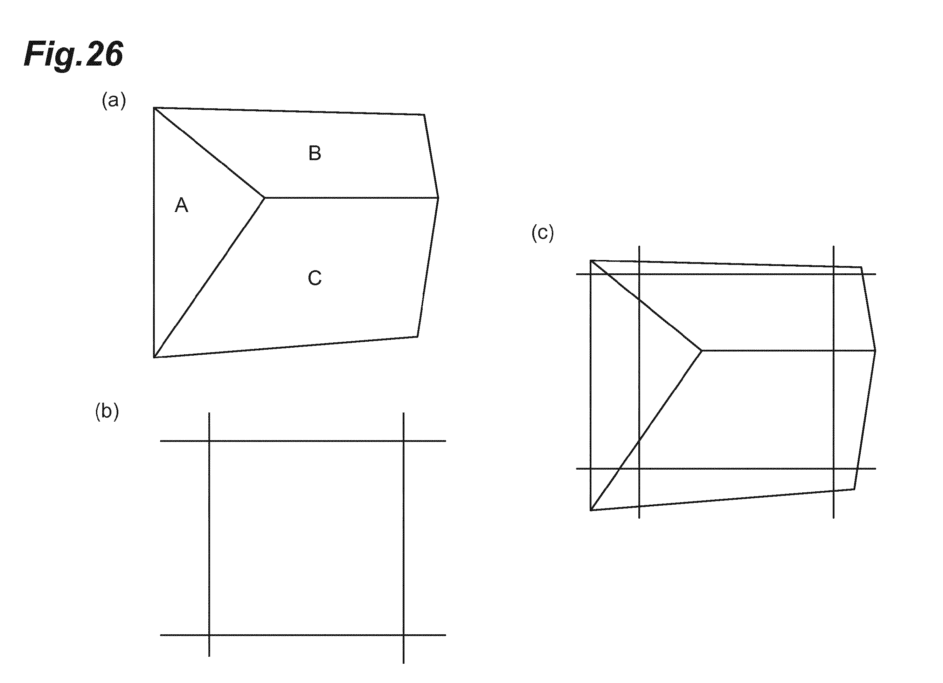

The conversion unit 16 functions as a conversion means that converts the number of terminals in the area acquired by the area terminal number acquisition unit 15 into the number of terminals in a mesh based on the positional relationship between the range of the area estimated by the area range estimation unit 14 and the mesh partitioned based on a specified partition rule. This is described hereinafter with reference Fig. 26. Fig. 26(a) is an area diagram showing an area range of an area, Fig. 26(b) is a diagram showing a mesh, and Fig. 26(c) is a composition diagram combining the area and the mesh. The conversion unit 16 combines the area diagram (see Fig. 26(a)) that is recreated based on the estimated area information estimated by the area range estimation unit 14 and the two-dimensional mesh (see Fig. 26(b)) that is recreated based on a specified partition rule and thereby obtains the compose diagram as shown in Fig. 26(c).

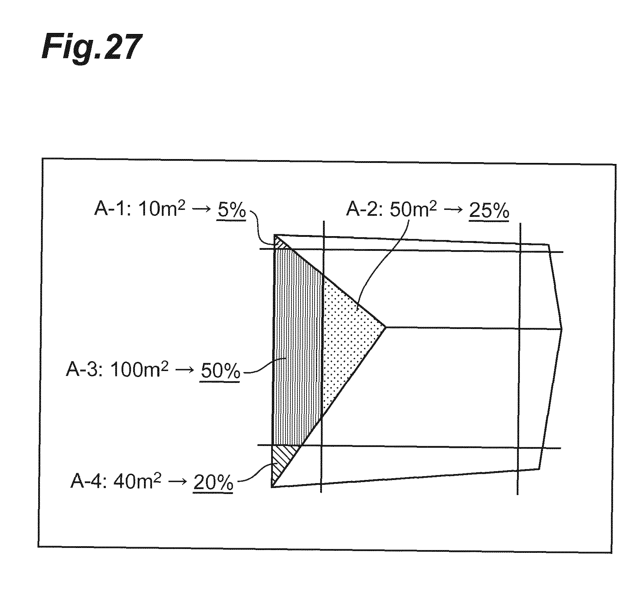

Next, the conversion unit 16 divides each area by the mesh boundary in the above composition diagram. For example, as shown in Fig. 27, the area A in Fig. 26(a) is divided into four divided areas A-1, A-2, A-3 and A-4 by the mesh boundary. Then, the conversion unit 16 calculates the area of each divided area and calculates the area ratio of the respective divided areas. For example, when 10m², 50m²,100m² and 40m² are calculated as the areas of A-1, A-2, A-3 and A-4, respectively, as shown in Fig. 27, 5%, 25%,50% and 20% are calculated as the area ratio (for example, the percentage) of the divided areas A-1, A-2, A-3 and A-4, respectively.

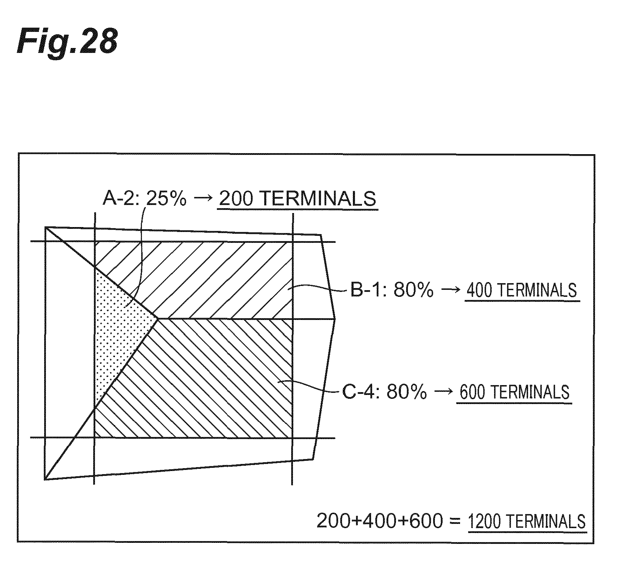

Next, the conversion unit 16 calculates the number of terminals in each divided area. For example, when the number of terminals in the area A of Fig. 26(a) is 800, 200 (i.e. 800×25%) is calculated as the number of terminals in the divided area A-2 as shown in Fig. 28. Likewise, when the numbers of terminals in the area B and C are 500 and 750, respectively, 400 (i.e. 500×80%) is calculated as the number of terminals in the divided area B-1 which has the area ratio of 80% in the area B, and 600 (i.e. 750×80%) is calculated as the number of terminals in the divided area C-4 which has the area ratio of 80% in the area C.

Further, the conversion unit 16 calculates the total number of terminals in a plurality of divided areas included in one mesh and thereby calculates the number of terminals in the mesh. In the example of Fig. 28, the total number of terminals in the divided areas A-2, B-1 and C-4 included in one mesh is calculated as 1200 (i.e. 200+400+600), and 1200 is determined as the number of terminals in the mesh.

In this manner, it is possible to convert the number of terminals in each area into the number of terminals in each partition. The area terminal number acquisition unit 15 and the conversion unit 16 may be placed outside of the area range estimation device 10, 10A.

### (Eighth Embodiment)

In the eighth embodiment, an example in which an estimated value (the number of terminals) in each area, which is a unit of aggregation, is converted into an estimated value in each unit of output (which is a mesh in this example) in the environment where two or more of the communication area of an indoor communication area and the communication areas of a plurality of outdoor base stations using frequency bands with different radio ranges geographically overlap is described. Note that the eighth embodiment can be applied to the first to sixth embodiments described above.

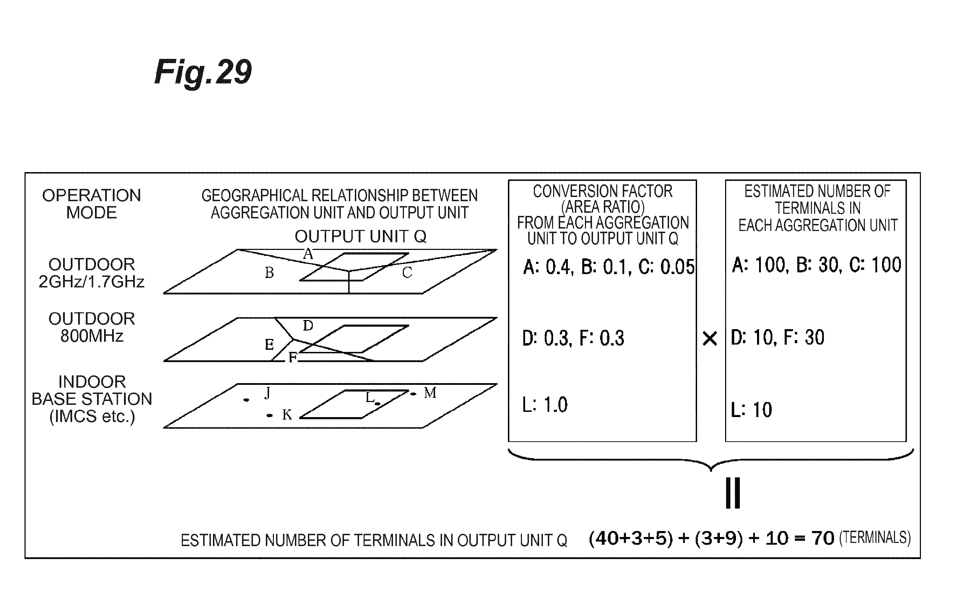

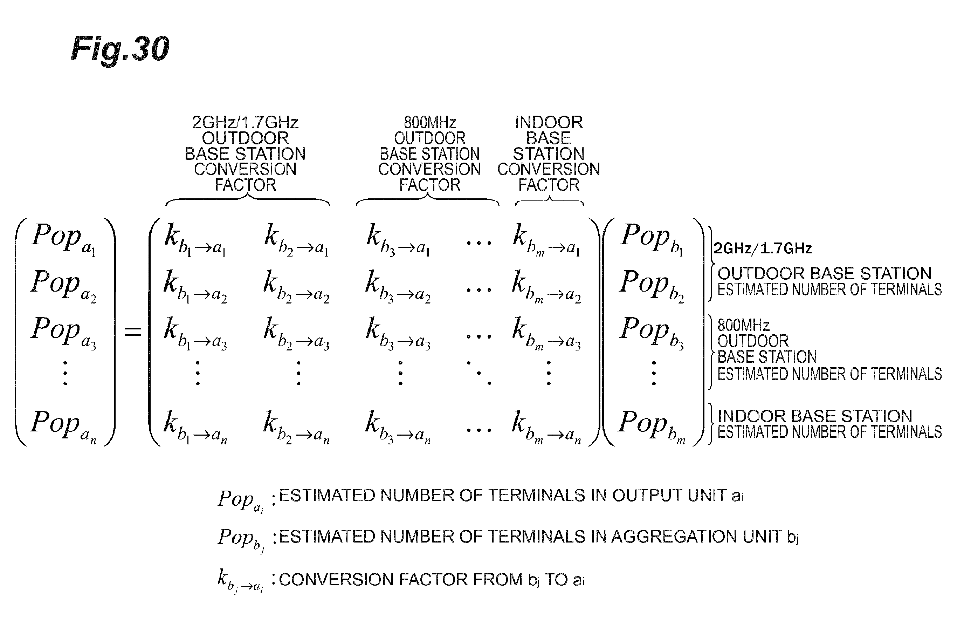

Although the functional block configuration of an area range estimation device according to the eighth embodiment is the same as that of the seventh embodiment, the process in the conversion unit 16 is different, and therefore the process in the conversion unit 16 is described hereinafter with reference to Figs. 29 and 30.

As shown in Fig. 29, in the environment where the communication area of an indoor base station and the communication areas of a plurality of outdoor base stations using frequency bands with different radio ranges (outdoor 2GHz/1.7GHz and outdoor 800MHz) geographically overlap, the conversion unit 16 performs the conversion process described in the seventh embodiment for each of the communication areas and thereby calculates the number of terminals in each unit of output (mesh) for each communication area and finally adds up the number of terminals for the respective communication areas in each unit of output, thus obtaining the number of terminals in each unit of output.

In the example of Fig. 29, the conversion unit 16 first performs the conversion process described in the seventh embodiment for each of the communication area of the outdoor base station using outdoor 2GHz/1.7GHz, the communication area of the outdoor base station using outdoor 800MHz and the communication area of the indoor base station. For example, assuming that the divided area where the output unit Q and the area A overlap has the area ratio of 40% with respect to the whole area A in the communication area of the outdoor base station using outdoor 2GHz/1.7GHz, the estimated number of terminals in the divided area where the output unit Q and the area A overlap is calculated as 40 by multiplying the estimated number of terminals in the area A, 100, by the area ratio 0.4. In the same manner, the estimated number of terminals in the divided area where the output unit Q and the area B overlap is calculated as 3 (the estimated number of terminals 30 in the area B × the area ratio 0.1) and the estimated number of terminals in the divided area where the output unit Q and the area C overlap is calculated as 5 (the estimated number of terminals 100 in the area C × the area ratio 0.05. For the communication area of the outdoor base station using outdoor 800MHz also, the estimated number of terminals in the divided area where the output unit Q and the area D overlap is calculated as 3 (the estimated number of terminals 10 in the area D × the area ratio 0.3) and the estimated number of terminals in the divided area where the output unit Q and the area F overlap is calculated as 9 (the estimated number of terminals 30 in the area F × the area ratio 0.3). On the other hand, for the indoor base station, because the area of a radio range of each indoor base station is very small and the whole area L of one indoor base station overlaps with the output unit Q in the example of Fig. 29, the area ratio can be considered to be 100%. Thus, by multiplying the estimated number of terminals 100 in the area L, by the area ratio 1.0, the estimated number of terminals in the area where the output unit Q and the area L overlap (which is the whole area L in this example) is calculated as 10.

Finally, the conversion unit 16 adds up the estimated number of terminals in the areas where the output unit Q and the respective areas overlap obtained as above and thereby obtains the estimated number of terminals in the output unit Q, which is 70. In the above manner, it is possible to convert the number of terminals in each unit of aggregation into the number of terminals in each unit of output Q.

Although Fig. 29 shows the conversion into the estimated number of terminals in one output unit Q, the conversion may be made into the estimated number of terminals in all target output units by performing the same process for another output unit.

Fig. 30 shows a determinant for conversion into the estimated number of terminals in n number of target output units. Specifically,
*Pop*_{*b*ⱼ}
(where j is an integer of 1 to m (m is the number of aggregation units overlapping with any of the n number of target output units)) on the right-hand side of the equation in Fig. 30 indicates the number of terminals (estimated number of terminals) in each aggregation unit calculated by the terminal number correction unit 16,
*Pop_{aᵢ}*
(where i is an integer of 1 to m) on the left-hand side indicates the number of terminals in each output unit, and
*k*_{*bⱼ*→*aᵢ*}
in the determinant on the right-hand side indicates a conversion factor for converting the number of terminals in the aggregation unit bⱼ to the number of terminals in the output unit aᵢ. The conversion factor corresponds to the area ratio of the divided area to the whole area described above.

Each conversion factor in Fig. 30 can be calculated in advance from the positional relationship between the unit of estimation (area) and the unit of output (mesh), and by calculating each conversion factor in advance and storing the equation of Fig. 30, it is possible to convert the number of terminals (estimated number of terminals) in each unit of aggregation calculated by the estimation into the number of terminals in each unit of output easily and quickly with use of the equation of Fig. 30.

In the above manner, even in the environment where two or more of the communication area of an indoor communication area and the communication areas of a plurality of outdoor base stations using frequency bands with different radio ranges geographically overlap, it is possible to convert the number of terminals in each unit of aggregation into the number of terminals in each unit of output.

### (Ninth Embodiment)

In the above-described embodiments and alternative examples, the correspondence information generation unit 13 generates the correspondence information based on the first location information and the second location information. In this embodiment, an example that directly acquires the correspondence information is described. Note that the system configuration of a communication system according to the ninth embodiment is the same as the system configuration according to the first embodiment in Fig. 1, and the description of the system configuration is omitted.

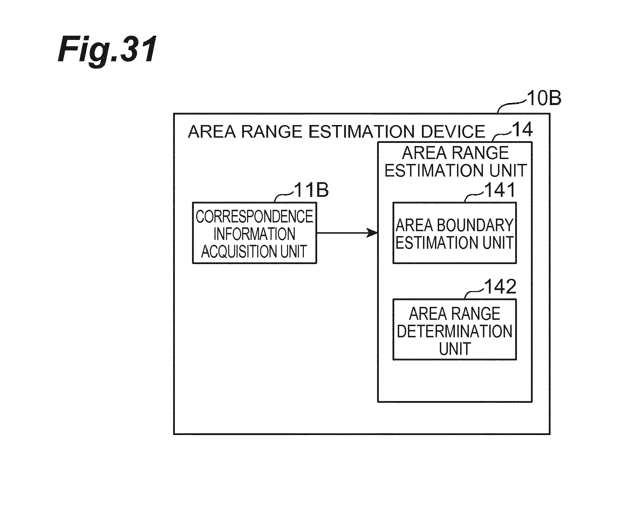

The functions of a area range estimation device 10B according to the ninth embodiment are described hereinafter. Fig. 31 is a block diagram showing the functional configuration of the area range estimation device 10B. As shown in Fig. 31, the area range estimation device 10B includes a correspondence information acquisition unit (correspondence information acquisition means) 11B and an area range estimation unit 14. Note that the same elements as the elements of the area range estimation device 10 according to the first embodiment are denoted by the same reference symbols and not redundantly described.

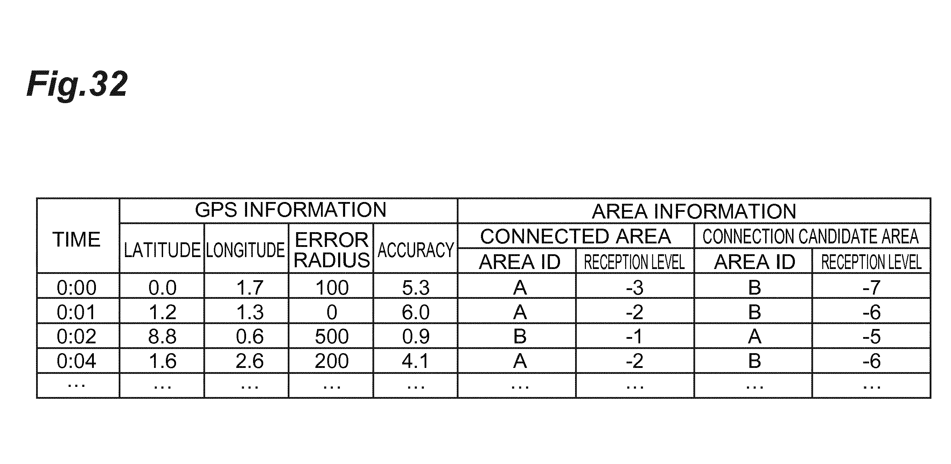

According to 3GPP Technical Report (3GPP TR 36.805), which is the international standard of mobile terminals, reception level information about the reception level of radio waves transmitted from the mobile terminal 100 is generated when the mobile terminal 100 uses GPS. In some cases, a plurality of reception level information are generated for the respective areas of influence of an antenna of the RNC 300 (for each of areas). Then, as in 3GPP Technical Report (3GPP TR 36.805), which is the international standard of mobile terminals, information (which is referred to hereinafter as "GPS information with area information") associating the reception level information, an area ID corresponding to the reception level information, GPS information (coordinate information) transmitted from the mobile terminal 100, and positioning time information is generated as shown as an example in Fig. 32.

Note that, as shown in Fig. 32, the GPS information contains GPS error radius, positioning accuracy. The accuracy is set depending on a positioning level (whether positioning by satellite or positioning by base station and, in the case of satellite positioning, the number of satellites sensed etc.). Further, a connected area is an area where the reception level is the highest, and a connection candidate area is an area where the reception level is the second highest. Determination can be made assuming that the mobile terminal 100 is located within the connected area. Note that there may be a plurality of connection candidate areas.

The GPS information with area information collection unit may be included in the social sensor unit 501 or the mobile demography unit 503. The correspondence information acquisition unit 11B acquires the GPS information with area information from the GPS information with area information collection unit, which is not shown.

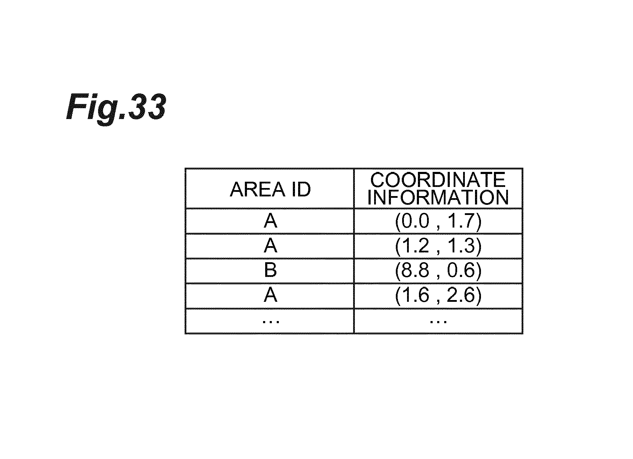

The correspondence information acquisition unit 11B extracts the correspondence information (see Fig. 33) composed of the connected area ID and the coordinate information (latitude and longitude) among the acquired GPS information with area information, and outputs the extracted correspondence information to the area range estimation unit 14. The subsequent process is the same as that of the first embodiment. Note that the correspondence information according to this embodiment can be treated as the correspondence information in which the time difference information (which equals to the time difference between the time indicated by the first location information and the time indicated by the second location information described in the first embodiment; see Fig. 5) is zero. By considering the time difference information as zero, the correspondence information extracted in this embodiment can be used for the area range estimation that is other than the first embodiment. Further, in this embodiment, the GPS information with area information at least contains the connected area ID and the coordinate information (latitude and longitude).

In this manner, when the GPS information with area information can be acquired, it is possible to estimate the area range using the correspondence information contained in the GPS information with area information. It is thereby possible to reduce the processing steps compared with the case of generating the correspondence information using the first location information and the second location information. Note that, in this embodiment also, the correspondence information may be generated by the method described in the first embodiment or the like, and the area range may be estimated using both of the generated correspondence information and the correspondence information extracted from the GPS information with area information.

### (Tenth Embodiment)

In this embodiment, the GPS information with area information is acquired in the same manner as in the ninth embodiment, and weights are assigned to the correspondence information as in the second to sixth embodiments. Note that the system configuration of a communication system according to the tenth embodiment is the same as the system configuration according to the first embodiment in Fig. 1, and the description of the system configuration is omitted.

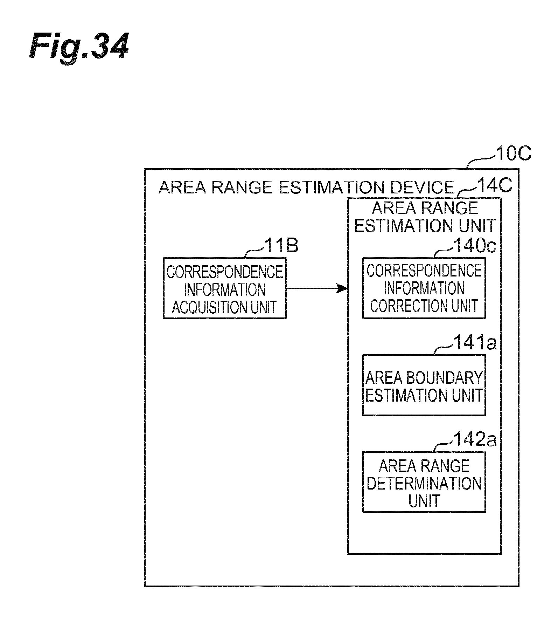

The functions of the area range estimation device 10C according to the tenth embodiment are described hereinafter. Fig. 34 is a block diagram showing a functional configuration of the area range estimation device 10C. As shown in Fig. 34, the area range estimation device 10C includes a correspondence information acquisition unit (correspondence information acquisition means) 11B and an area range estimation unit 14C. The area range estimation unit 14C includes a correspondence information correction unit 140c, an area boundary estimation unit 141 a, and an area range determination unit 142a. Note that the same elements as the elements of the area range estimation device 10, 10B according to the third and ninth embodiments are denoted by the same reference symbols and not redundantly described.

The correspondence information correction unit 140c that performs different processing from the third and ninth embodiments is described hereinbelow. The correspondence information correction unit 140c calculates the weight of each correspondence information based on the GPS information with area information (see Fig. 32) acquired by the correspondence information acquisition unit 11B. The concept of weighting is that "a greater weight is assigned to reliable information", for example. This concept of weighting is one example, and another concept may be used. Then, the correspondence information correction unit 140c increases or decreases the number of data of the correspondence information based on the calculated weight in the same manner as in the third to sixth embodiments.

The following six methods are described as a weight calculation method in the correspondence information correction unit 140c.

### (Weight Calculation Method 1)

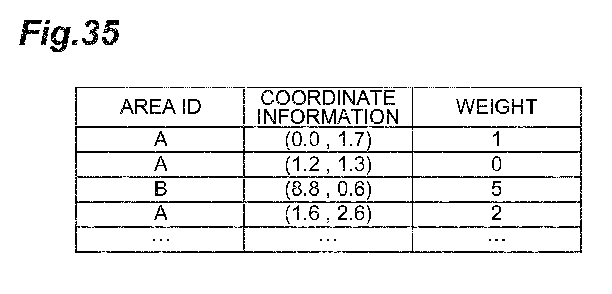

First, the case where a weight is calculated using the error radius (quality information) of the GPS information with area information is described. As the error radius is smaller, the reliability of information is higher. Thus, the correspondence information correction unit 140c calculates a value obtained by dividing the value of "error radius" contained in the GPS information with area information by 100 as a weight and associates the calculated weight and the correspondence information. For example, when the GPS information with area information shown in Fig. 32 is acquired, the error radius is divided by 100, thereby calculating a weight for each correspondence information as shown in Fig. 35. Note that, although the case where the value of error radius is divided by 100 is described, "100" is just an example, and another value may be used. Further, the value of error radius may be normalized in order to use a value obtained by dividing the error radius by a specified value as a weight. For example, as an example of normalization, the value of error radius may be proportionally converted so that the mean-square value is 1 or linearly converted so that the zero-average dispersion is 1. Further, the relevance of normalization may be verified using cross-validation and optimized. The normalization may be used also for the weight calculation methods 2 to 4 described below.

### (Weight Calculation Method 2)

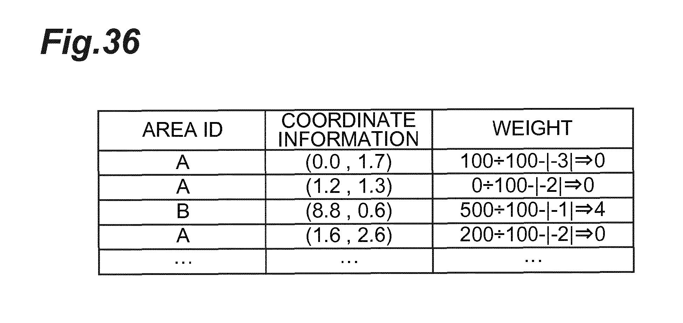

Second, the case where a weight is calculated using the error radius and the reception level (quality information) of the GPS information with area information is described. As the error radius is smaller, the reliability of information is higher, and as the reception level is higher, the reliability of information is higher. Thus, the correspondence information correction unit 140c calculates a value obtained by dividing the value of "error radius" contained in the GPS information with area information by 100 and subtracting the absolute value of "reception level" of the connected area from the obtained value as a weight and associates the calculated weight and the correspondence information. Note that, when the value of the obtained weight is negative, the weight is calculated as 0. For example, when the GPS information with area information shown in Fig. 32 is acquired, the above operation is performed using the error radius and the reception level, thereby calculating a weight for each correspondence information as shown in Fig. 36. Note that the reception level of the connection candidate area, rather than the reception level of the connected area, may be used. Alternatively, both of the reception level of the connected area and the reception level of the connection candidate area may be used.

### (Weight Calculation Method 3)

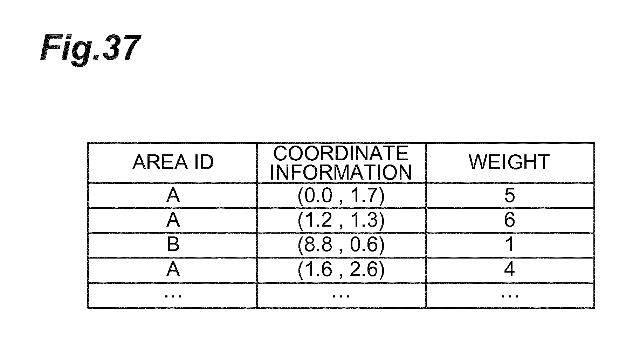

Third, the case where a weight is calculated using the accuracy (quality information) of the GPS information with area information is described. As the accuracy is higher (value is larger), the reliability of information is higher. Thus, the correspondence information correction unit 140c calculates a value obtained by rounding off the value of "accuracy" contained in the GPS information with area information as a weight and associates the calculated weight and the correspondence information. For example, when the GPS information with area information shown in Fig. 32 is acquired, the value of accuracy is rounded off, thereby calculating a weight for each correspondence information as shown in Fig. 37.

### (Weight Calculation Method 4)

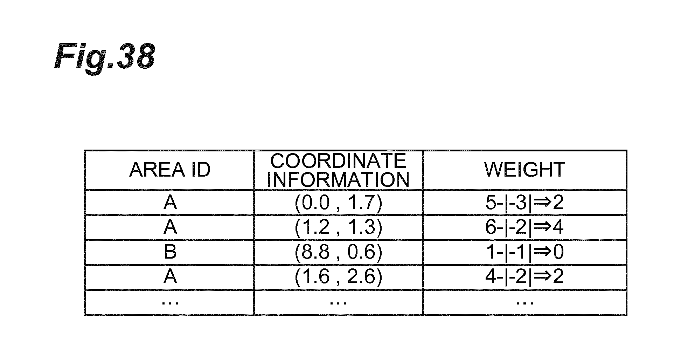

Fourth, the case where a weight is calculated using the accuracy and the reception level of the GPS information with area information is described. As the accuracy is higher, the reliability of information is higher, and as the reception level is higher, the reliability of information is higher. Thus, the correspondence information correction unit 140c calculates a value obtained by rounding off the value of "accuracy" contained in the GPS information with area information and subtracting the absolute value of "reception level" of the connected area from the obtained value as a weight and associates the calculated weight and the correspondence information. Note that, when the value of the obtained weight is negative, the weight is calculated as 0. For example, when the GPS information with area information shown in Fig. 32 is acquired, the above operation is performed using the accuracy and the reception level, thereby calculating a weight for each correspondence information as shown in Fig. 38. Note that the reception level of the connection candidate area, rather than the reception level of the connected area, may be used.

### (Weight Calculation Method 5)

Fifth, the case where a weight of the correspondence information is calculated using the reception level of the GPS information with area information is described. As the reception level is higher, the reliability of information is higher. In this example, a calculation method of a weight (W) when there is a single reception level (R1) of the GPS information with area information in the connected area is described. In this case, the correspondence information correction unit 140c can make the weight proportional to the reception level of the GPS information with area information, for example. For example, the correspondence information correction unit 140c can calculate the weight (W) by W=c×R1+K. Note that "c" and "k" in the equation are given factors. Further, the values of "c" and "k" may be set arbitrarily or adjusted automatically by cross-validation or the like. Note that the reception level of the connection candidate area, rather than the reception level of the connected area, may be used. Alternatively, both of the reception level of the connected area and the reception level of the connection candidate area may be used.

### (Weight Calculation Method 6)

Sixth, the case where a weight of the correspondence information is calculated using a plurality of reception levels of the GPS information with area information is described. When the GPS information with area information contains the reception level of the "connected area" and the reception level of the "connection candidate area", as a difference between the two reception levels is larger, the reliability of information is higher. In this example, a calculation method of a weight (W) when there are a plurality of reception levels (R1 and R2) (where R1>R2) of the GPS information with area information in the connected area is described. In this case, the correspondence information correction unit 140c can make the weight proportional to a difference between the reception levels, for example. For example, the correspondence information correction unit 140c can calculate the weight (W) by W=c×(R1—R2)+K. Note that "c" and "k" in the equation are given factors. Further, the values of "c" and "k" may be set arbitrarily or adjusted automatically by cross-validation or the like. Further, when the GPS information with area information contains a plurality of reception levels of the "connection candidate area", a difference between the reception level of the "connected area" and the reception level of the "connection candidate area" with the highest reception level among the plurality of reception levels of the "connection candidate area" may be used. Further, when the GPS information with area information does not contain the reception level of the "connected area" and contains the reception levels of a plurality of "connection candidate areas", a difference between the highest reception level and the second highest reception level may be used.

In this manner, in the case where the GPS information with area information is acquired, the correspondence information correction unit 140c can assign weights to the correspondence information. It is thereby possible to accurately estimate the area range. Note that, a weight may be calculated by combining two or more calculation methods among the above six weight calculation methods.

Further, in the case where the weighted correspondence information is calculated based on the GPS information with area information as in the tenth embodiment, the dispersed correspondence information may be dispersed (for example, weights are reflected on the dispersion of the normal distribution so that the dispersion is inversely proportional to weights) using the weights calculated using at least any one of the reception level, the error radius and the accuracy contained in the GPS information with area information when arranging (plotting) the dispersed correspondence information by increasing the number of data by weights as shown in Fig. 20 described in the sixth embodiment. Likewise, the number of dispersed correspondence information can be set (the number of dispersed correspondence information is increased or reduced based on weights. The dispersed correspondence information are generated corresponding to the number of weights, for example) using the weights calculated using at least any one of the reception level, the error radius and the accuracy contained in the GPS information with area information when arranging (plotting) the dispersed correspondence information by increasing the number of data by weights. Note that either of the dispersion of the dispersed correspondence information or the number of the dispersed correspondence information may be fixed to a given value. Note that the GPS information with area information contains at least any one of the reception level, the error radius and the accuracy as the quality information.

### (Eleventh Embodiment)

The area range estimation device 10, 10A according to the above first to eighth embodiments may further include a population estimation unit (which is equivalent to "population estimation means" in CLAIMS) 17 that estimates a population in each partition as shown in Fig. 25. The population estimation unit 17 estimates the population based on a predetermined enlargement factor and the number of terminals in a partition obtained by the conversion unit 16. As the enlargement factor, the inverse number of "the product of the in-area rate and the ownership rate of mobile terminals (which is the ratio of the number of in-area terminals to the population)" may be used as an example. The "in-area rate" is the ratio of the number of in-area terminals to the number of contracts of the mobile terminals 100, and the "ownership rate" is the ratio of the number of contracts to the population. It is preferred that the enlargement factor is derived for each unit of population estimation, which is a measure for the population estimation unit 17 to estimate the population, though not mandatory. The "unit of population estimation" may be an attribute, place, time period or the like, for example, and it may be on the basis of prefecture in address, age group of every 5 years, gender, time period of every one hour or the like.

A unit of enlargement factor calculation for calculating the enlargement factor may be on the basis of prefecture in address (which are administrative districts and may be cities and towns), age group of every 5 or 10 years, gender, time period of every one hour or the like, or a combination of two or more may be used. For example, when the unit of enlargement factor calculation is "males in their twenties living in Tokyo", pyramid data representing the number of users is obtained by extracting the location data corresponding to males in their twenties who live in Tokyo (whose address information in user attribute is Tokyo) and counting the number of terminals, and population pyramid data for the males in their twenties living in Tokyo is acquired from statistical data (for example, basic resident register etc.). In this case, Japan is the wide area, and the administrative district included in the wide area is Tokyo. Note that, when obtaining the pyramid data representing the number of users, for the condition of "living in Tokyo", the location data whose address information in user attribute is Tokyo, not only the location data of users who are located in Tokyo, are extracted.

Then, the acquisition rate of location data (i.e. the number of in-area terminals/population) in the unit of enlargement factor calculation (which is males in their twenties living in Tokyo in this example) is calculated from the user number pyramid data and the population pyramid data, and the inverse number of the obtained "acquisition rate of location data" can be derived as the enlargement factor. Note that, although the unit of enlargement factor calculation and the unit of population estimation are equal in this description, this is just an example and it is not limited thereto.

Note that the population estimation unit 17 may be placed outside the area range estimation device 10, 10A. Further, the above-described population estimation unit 17 may be placed also in the area range estimation device 10C according to the ninth and tenth embodiments to estimate the population.

### (Twelfth Embodiment)

In the twelfth embodiment, an embodiment in which before the population estimated by the population estimation unit 17 is output in the eleventh embodiment, a hiding process is performed on the estimated value on the basis of a predetermined criterion is described.

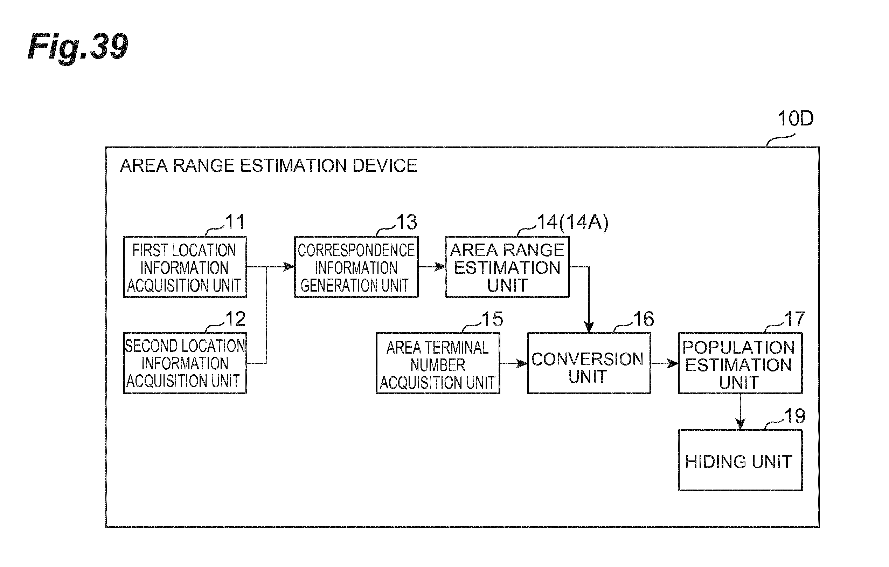

As shown in Fig. 39, the functional block configuration of a area range estimation device 10D according to the twelfth embodiment is a configuration in which a hiding unit 19 that performs a hiding process is added to the functional block configuration (Fig. 25) of the area range estimation device according to the tenth embodiment.

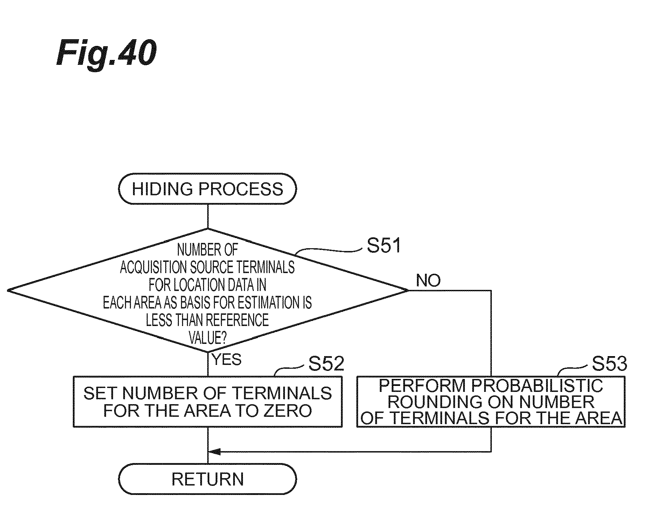

The hiding unit 19 performs a hiding process shown in Fig. 40, for example, when it receives the number of terminals (population) from the population estimation unit 17. Specifically, the hiding unit 19 acquires the number of acquisition source terminals indicating from how many terminals the location data of each area based on which the population estimated by the population estimation unit 17 is estimated is acquired. The hiding unit 19 then determines whether the number of acquisition source terminals is less than a predetermined reference value (for example, 10) for determining that the hiding process is necessary or not (Step S41 in Fig. 40). Note that it is assumed that the number of terminals acquired by the area terminal number acquisition unit 15 is estimated based on the location data indicating the location of the mobile terminal 100. As one example, the number of acquisition source terminals may be added in advance to the number of terminals acquired by the area terminal number acquisition unit 15.

In Step S41, when the number of acquisition source terminals for the location data in each area as a basis for the estimation of the number of terminals is less than the reference value, the hiding unit 19 sets the number of terminals (population) in this area to zero and thereby hides the number of terminals (Step S42). Note that the hiding method is not limited to setting the number of terminals (population) to zero, and another method such as representing the number of terminals (population) by a specified character or symbol (for example, "X" etc.) may be employed.

On the other hand, in Step S41, when the number of acquisition source terminals for the location data in each area as a basis for the estimation of the population is equal to or more than the reference value, the hiding unit 19 performs the following probabilistic rounding of a class width used in the estimation value output on the number of terminals (population) in the area (Step S43). Specifically, assuming that the number of terminals (population) in a certain area is x and the class width is k, the hiding unit 19 rounds the number of terminals (population) x to k(n+1) with the probability (x-kn)/k and to kn with the probability (k(n+1)-x)/k when kn≤x<k(n+1) (n is an integer).

For example, in the case where the number of terminals (population) x is 23 and the class width k is 10, because k×2≤x<k(2+1), n=2 and the number of terminals "23" is rounded to "30" with the probability 0.3 (with the probability of 30%) and to "20" with the probability 0.7 (with the probability of 70%).

By performing the above hiding process in the hiding unit 19, it is possible to avoid personal identification from the estimation result of the population and thereby enhance the usability of the estimation result. It is also possible to avoid inconvenience such that a hidden value is estimated from another value.

Further, the hiding process by the hiding unit 19 is not limited to the process shown in Fig. 40, and another process may be used. For example, when the determination in Step S41 of Fig. 40 results in NO, the processing of Step S43 may be skipped.

It should be noted that the area range estimation device and the terminal number estimation method according to the present invention are not limited to those described in the above first to twelfth embodiments. The area range estimation device and the terminal number estimation method according to the present invention may be those obtained by making various changes and modifications to the area range estimation device and the terminal number estimation method according to the first to twelfth embodiments without departing from the scope of the following claims or applying them to others.

For example, although the area range estimation device 10, 10A to 10D is constructed in the peta mining unit 502 in the above embodiments, it may be constricted in another unit in the control center 500. Further, the area range estimation device 10, 10A to 10D may be constructed in a server device outside the control center 500.

Further, the area range estimation device 10, 10A to 10D may estimate the number of terminals in a specified area during a specified time period on a regular basis according to a periodical terminal number estimation instruction. Furthermore, the area range estimation device 10, 10A to 10D may receive a terminal number estimation instruction from an external interface as needed and estimate the number of terminals in a desired area during a desired time period.

Furthermore, although the second time information contained in the second location information is information indicating the time when the mobile terminal 100 has transmitted the second location information or the time when the control center 500 has received the second location information in the first to eighth , eleventh and twelfth embodiments, it is not limited thereto. The second time information may be any information as long as it indicates the time related to transmission and reception of the second location information, and the time given in any part may be used.

Further, although the correspondence information generation unit 13 stores the correspondence information associating the area ID, the coordinate information and the time difference information in the correspondence information management table, the time difference information may be eliminated in the case where the area range estimation unit 14 does not perform the estimation of area range in consideration of the time difference. For example, when the time difference between the time indicated by the first time information and the time indicated by the second time information is within a specified value, the correspondence information generation unit 13 may generate the correspondence information associating the area ID contained in the first location information and the coordinate information contained in the second location information, not associating the time difference information indicating the time difference.

Further, although the correspondence information generation unit 13 stores the correspondence information associating the area ID, the coordinate information and the time difference information in the correspondence information management table, the time difference information may be eliminated. For example, when a time difference between the time indicated by the first time information and the time indicated by the second time information is within a specified value, the correspondence information generation unit 13 may generate the correspondence information associating the area ID contained in the first location information and the coordinate information contained in the second location information, not associating the time difference information indicating the time difference.

Further, although the correspondence information correction unit 140a shifts the coordinate position of the correspondence information in proportion to the time difference in the second embodiment, it is not limited thereto. The correspondence information correction unit 140a may shift the coordinate position of the correspondence information toward the center of gravity position more largely as the time difference is greater.

Furthermore, although the correspondence information correction unit 140a increases the same correspondence information by one as the time difference decreases by one minute in the third embodiment, it is not limited thereto. The correspondence information correction unit 140a may increase the percentage of increase in the number of correspondence information as the time difference is smaller.

Further, the above-described embodiments may be implemented as a program module for executing the functions in the area range estimation device 10, 10A to 10D. Specifically, the functions equal to those of the area range estimation device 10, 10A to 10D described above may be implemented by reading an area range estimation program including as appropriate a first location information acquisition module corresponding to the first location information acquisition unit 11, a second location information acquisition module corresponding to the second location information acquisition unit 12, a correspondence information generation module corresponding to the correspondence information generation unit 13, an area range estimation module corresponding to the area range estimation unit 14, a correspondence information acquisition module corresponding to the correspondence information acquisition unit 11B, a hiding module corresponding to the hiding 19 and the like on a computer system such as a server. The area range estimation program is provided by being stored in a storage medium such as a flexible disk, CD-ROM, DVD, ROM or the like or a semiconductor memory, for example. Further, the area range estimation program may be provided as a computer data signal superimposed on a carrier wave through a network.

Note that, in the above-described embodiments and alternative examples, in the case where a terminal ID for identifying a user of the mobile terminal 100 is added to the first location information, the second location information and the GPS information with area information, the terminal ID is information for distinguishing from another user, at least. Thus, the terminal ID may be obtained by performing an anonymization process including conversion into irreversible codes by a one-way function on information for identifying a user. As the one-way function, the keyed hash function on the basis of a hash function that is recommended by foreign and domestic rating projects or rating agencies may be used. The anonymization process may be performed in the first location information acquisition unit 11, the second location information acquisition unit 12 and the correspondence information acquisition unit 11B described above. Note that, however, the anonymization process may be performed in another unit.

### Reference Signs List

10, 10A to 10D...area range estimation device, 11...first location information acquisition unit (first location information acquisition means), 12... second location information acquisition unit (second location information acquisition means), 11B...correspondence information acquisition unit (correspondence information acquisition means), 13... correspondence information generation unit (correspondence information generation means), 14, 14A...area range estimation unit (area range estimation means), 15...area terminal number acquisition unit (area terminal number acquisition means), 16... conversion unit (conversion means), 17...population estimation unit (population estimation means), 19...hiding unit, 100...mobile terminal (terminal), 141, 141a...area boundary estimation unit, 142, 142a...area range determination unit, 140a, 140c....correspondence information correction unit

## Claims

1. An area range estimation device using correspondence information containing area identification information identifying a location area of a terminal and location information indicating a location of the terminal, comprising:
an area boundary estimation means for estimating a boundary of an area identified by each area identification information based on location information associated with each of the area identification information identifying a plurality of different location areas of the terminal; and
an area range estimation means for estimating a range of an area based on a boundary of an area estimated by the area boundary estimation means.

2. The area range estimation device according to Claim 1, further comprising:
a first location information acquisition means for acquiring first location information containing terminal identification information identifying the terminal and area identification information identifying a location area of the terminal; and
a second location information acquisition means for acquiring second location information containing the terminal identification information and location information indicating a location of the terminal, wherein
the correspondence information contains at least one of first correspondence information generated by a correspondence information generation means for generating correspondence information based on the area identification information and the location information by using the first location information acquired by the first location information acquisition means and the second location information acquired by the second location information acquisition means, and second correspondence information acquired by a correspondence information acquisition means for acquiring correspondence information containing the terminal identification information identifying the terminal, the area identification information identifying a location area of the terminal, and the location information indicating a location of the terminal.

3. The area range estimation device according to Claim 2,
wherein
the first location information further contains first time information indicating a time when the first location information is acquired,
the second location information further contains second time information indicating a time when the second location information is acquired, and
the correspondence information generation means extracts the first location information and the second location information having the same terminal identification information and having a time difference between a time indicated by the first time information and a time indicated by the second time information being a specified value or less, and generates first correspondence information based on the area identification information of the first location information and the location information of the second location information.

4. The area range estimation device according to Claim 2,
wherein
the first location information further contains first time information indicating a time when the first location information is acquired,
the second location information further contains second time information indicating a time when the second location information is acquired, and
the correspondence information generation means
extracts the second location information having the same terminal identification information as one first location information, the second location information being a specified number of second location information containing the second time information indicating a time earlier than a time indicated by the first time information contained in the one first time information and a specified number of second location information containing the second time information indicating a time later than a time indicated by the first time information contained in the one first time information,
estimates location information indicating a location of the terminal at the time indicated by the first time information contained in the one first location information based on the second time information and the location information contained in each of the extracted second location information and the first time information contained in the one first location information, and
generates first correspondence information based on the estimated location information of the terminal and the area identification information of the one first location information.

5. The area range estimation device according to Claim 3 or 4,
wherein
when first observation target information containing at least one of observation target period information indicating a period to be observed and observation area information indicating an area to be observed is input from outside, the first location information acquisition means acquires the first location information based on the first observation target information, and
when second observation target information containing at least one of observation target period information indicating a period to be observed and observation range information indicating a geographical range to be observed is input from outside, the second location information acquisition means acquires the second location information based on the second observation target information.

6. The area range estimation device according to any one of Claims 3 to 5, wherein
the correspondence information generation means generates first correspondence information further containing time difference information indicating a time difference between a time indicated by the first time information and a time indicated by the second time information, and
the area boundary estimation means corrects the correspondence information in accordance with the time difference information of the correspondence information and estimates a boundary of an area identified by the area identification information based on the corrected correspondence information.

7. The area range estimation device according to any one of Claims 2 to 6, wherein
the second correspondence information further contains quality information about quality of the location information, and
the area boundary estimation means corrects the second correspondence information in accordance with the quality information and estimates a boundary of an area identified by the area identification information based on the corrected second correspondence information.

8. The area range estimation device according to Claim 7,
wherein
the area boundary estimation means corrects the correspondence information by calculating a center of gravity of a location indicated by the location information of the correspondence information for each of the area identification information of the correspondence information and shifting the location indicated by the location information of the correspondence information toward the center of gravity in accordance with the time difference information or the quality information of the correspondence information.

9. The area range estimation device according to Claim 7,
wherein
the area boundary estimation means corrects the correspondence information by assigning weights to the correspondence information in accordance with the time difference information or the quality information of the correspondence information.

10. The area range estimation device according to Claim 7,
wherein
the area boundary estimation means corrects the correspondence information by calculating a weight for each of the correspondence information in accordance with the time difference information or the quality information of the correspondence information, and newly generating a specified number of correspondence information dispersed from the location indicated by the location information contained in the correspondence information in accordance with a specified distribution on which the weight of the correspondence information is reflected and having the same area identification information as the correspondence information.

11. The area range estimation device according to any one of Claims 1 to 10, wherein
the area boundary estimation means estimates a boundary of an area identified by the area identification information based on the number of correspondence information containing the location information being within a specified area estimation unit region and the area identification information being specified area identification information.

12. The area range estimation device according to any one of Claims 3 to 5, wherein
the correspondence information generation means generates correspondence information further containing time difference information indicating a time difference between a time indicated by the first time information and a time indicated by the second time information, and
the area range estimation means
calculates a weight for each of the correspondence information in accordance with the time difference information of the correspondence information, and
calculates a probability that the terminal is present in the location indicated by the location information contained in the correspondence information and its vicinity by using a probability density function in accordance with a specified distribution on which the weight of the correspondence information is reflected, and estimates a range of an area identified by the area identification information based on the calculated probability.

13. The area range estimation device according to any one of Claims 1 to 12, further comprising:
an area terminal number acquisition means for acquiring the number of terminals in an area identified by the area identification information; and
a conversion means for converting the number of terminals in the area acquired by the area terminal number acquisition means into the number of terminals in a partition based on a positional relationship between a range of the area estimated by the area range estimation means and the partition partitioned according to a specified partition rule.

14. The area range estimation device according to Claim 13, further comprising:
a population estimation means for estimating a population of one user attribute based on the number of terminals converted by the conversion means and a ratio of the number of in-area terminals having the one user attribute in a predetermined wide area and a population of the one user attribute included in the wide area based on statistical data.

15. An area range estimation device comprising:
a first location information acquisition means for acquiring first location information containing terminal identification information identifying a terminal and area identification information identifying a location area of the terminal;
a second location information acquisition means for acquiring second location information containing the terminal identification information and location information indicating a location of the terminal;
a correspondence information generation means for generating correspondence information based on the area identification information and the location information by using the first location information acquired by the first location information acquisition means and the second location information acquired by the second location information acquisition means; and
an area range estimation means for estimating a range of an area identified by the area identification information based on the correspondence information generated by the correspondence information generation means.

16. An area range estimation method performed by an area range estimation device using correspondence information containing area identification information identifying a location area of a terminal and location information indicating a location of the terminal, comprising:
an area boundary estimation step of estimating a boundary of an area identified by each area identification information based on location information associated with each of the area identification information identifying a plurality of different location areas of the terminal; and
an area range estimation step of estimating a range of an area based on a boundary of an area estimated in the area boundary estimation step.

17. An area range estimation method performed by an area range estimation device, comprising:
a first location information acquisition step of acquiring first location information containing terminal identification information identifying a terminal and area identification information identifying a location area of the terminal;
a second location information acquisition step of acquiring second location information containing the terminal identification information and location information indicating a location of the terminal;
a correspondence information generation step of generating correspondence information based on the area identification information and the location information by using the first location information acquired in the first location information acquisition step and the second location information acquired in the second location information acquisition step; and
an area range estimation step of estimating a range of an area identified by the area identification information based on the correspondence information generated in the correspondence information generation step.
